Europäisches Patentamt

European Patent Office

Office européen des brevets

(19)

(11) Publication number: **0 040 820**
**A2**

# EUROPEAN PATENT APPLICATION

(21) Application number: **81103902.3**

(22) Date of filing: **20.05.81**

(51) Int. Cl.³: **F 16 H 5/52**

(30) Priority: **23.05.80 JP 69110/80**

(43) Date of publication of application: **02.12.81**
**Bulletin 81/48**

(84) Designated Contracting States: **DE FR GB**

(71) Applicant: **TOYOTA JIDOSHA KOGYO KABUSHIKI KAISHA, 1, Toyota-cho, Toyota-shi Aichi-ken (JP)**

(72) Inventor: **Taga, Yutaka, 4-48, Heiwacho, Toyota-shi Aichi-ken (JP)**
Inventor: **Morisawa, Kunio, 9-1, Maruyamacho, Toyota-shi Aichi-ken (JP)**
Inventor: **Nakamura, Shinya, 4-48, Heiwacho, Toyota-shi Aichi-ken (JP)**

(74) Representative: **Bühling, Gerhard, Dipl.-Chem. et al, Patentanwaltsbüro Tiedtke-Bühling-Kinne Grupe-Pellmann Bavariaring 4, D-8000 München 2 (DE)**

(54) **Electrical automatic transmission control system with two two-way electrically controlled valves and hydraulic switching valve.**

(57) An automatic transmission includes a gear transmission mechanism which has several friction engaging mechanisms, by selective engagement of which first, second, third, and fourth speed stages are available. The control system includes first and second electrically activated two-way switching valve systems. The first switching valve system switches the supply of fluid pressure to the gear transmission mechanism so as to switch the gear transmission mechanism between a certain two of the four speeds, and the other two of the four speeds. The second switching valve system switches the supply of fluid pressure to the gear transmission mechanism so as to switch the gear transmission mechanism between a pair of the four speeds made up of one of the abovementioned certain two and one of the abovementioned other two of the four speeds, and a pair made up of the remaining two of the four speeds. A two-way fluid pressure activated switching valve is switched according to a first pressure which is controlled in relation to the switching operation of the first switching valve system, and a second pressure which is controlled in relation to the switching operation of the second switching valve system. This fluid pressure activated switching valve controls the supply of fluid pressure to the gear transmission mechanism so as to switch the gear transmission mechanism between a certain two of the four speeds.

COMPLETE DOCUMENT

TITLE

see front page

## BACKGROUND OF THE INVENTION

The present invention relates to a transmission control system for an automatic transmission system for an automotive vehicle, and, more particularly, relates to such a transmission control system incorporating a hydraulic fluid pressure activated switching valve which, in combination with a pair of electrically activated switching valves, switches the supply of hydraulic fluid pressures to such an automatic transmission so as to control the transmission between two of its speeds.

Automatic transmissions for automotive vehicles which include gear transmission mechanisms including several fluid pressure activated friction engaging mechanisms such as multi plate clutches and multi plate brakes are well known in various forms. Such an automatic transmissions is usually conventionally controlled by a hydraulic fluid pressure control systems, which selectively controls supply of hydraulic fluid pressure to the friction engaging mechanisms, according to decisions that said hydraulic fluid pressure control system makes as to what speed stage of the gear transmission mechanism should be currently engaged, in view of and based upon the current values of various operational parameters of the vehicle, such as the road speed of the vehicle, the load upon an internal combustion engine of the vehicle, and the like.

In more detail, it is well known and conventional for such a hydraulic fluid pressure control system to receive supply of a throttle hydraulic fluid pressure which is produced as the output of a throttle hydraulic fluid pressure control valve, and which varies according to the amount of depression of an accelerator pedal of the vehicle incorporating the transmission, which is taken as indicative of the load on the internal combustion engine of the vehicle, and also to receive supply of a governor hydraulic fluid pressure which is produced as the output of a governor hydraulic fluid pressure control vlalve, and which is varied according to the road speed of the vehicle. Such a conventional hydraulic fluid pressure control system, in order to decide upon a speed stage of the gear transmission mechanism which is to be engaged, evaluates various relations between the magnitudes of the throttle hydraulic fluid pressure and the governor hydraulic fluid pressure, by supplying these pressures to various shift valves to act upon the valve elements thereof in opposition, according to various equilibrium relationships, and, based upon the movement of these valve elements, supplies of activating fluid pressures to the various friction engaging mechanisms such as the aforementioned clutches and brakes are made, in order to engage the appropriate speed stage which has thus been decided upon.

Thus, it is common for such a conventional hydraulically operating hydraulic fluid pressure transmission control system to include, in the case of controlling an automatic transmission with a gear transmission mechanism which has four forward speed stages, the following hydraulically activated transmission control valves: a first and second speed switching valve, which controls the switching between the first speed stage and the second speed stage, a second and third speed switching valve, which controls the switching between the second speed stage and the third speed stage, and a third and fourth speed switching valve, which controls the switching between the third speed stage and the fourth speed stage. Each of these hydraulically activated transmission control valves has a valve element which is driven in one direction by the abovementioned throttle hydraulic fluid pressure, and which is driven in the other direction by the abovementioned governor hydraulic fluid pressure, and, according to various equilibrium relationships governing these forces, and possibly other forces such as the biasing actions of compression coil springs and the like which act upon these valve elements, each of these valve elements is shifted to and fro, in order to switch the supplies of activating hydraulic fluid pressures to the friction engaging mechanisms. Of course, it is usual for the equilibrium relationships for the three above described transmission control valves to be different, in line with the various different desired values of threshold vehicle road speed and threshold accelerator pedal depression, etc., between the various speed stages of the gear transmission mechanism.

Nowadays, however, with the rapid progress which is being attained in the field of electronic control systems, various arrangements have been proposed, in which electronic control circuits make control decisions as to what speed stage of the gear transmission mechanism should be currently engaged, in view of and based upon the current values of various operational parameters of the vehicle, such as the road speed of the vehicle, the load upon an internal combustion engine of the vehicle, and the like. In such arrangements, an electric signal is sent by such an electronic control circuit to an electric to hydraulic pressure conversion device such as a solenoid valve, and this electric to hydraulic pressure conversion device performs the actual switching of the aforesaid activating hydraulic fluid pressures to the friction engaging mechanisms.

Many conventional such electric control systems for providing actuating hydraulic fluid pressures for engaging the friction engaging mechanisms of gear transmission mechanisms are essentially similar, in their basic control logic, to the above described conventional hydraulic fluid pressure transmission control systems, in having a first and second speed switching valve, which controls the switching between the first speed stage and the second speed stage, a second and third speed switching valve, which controls the switching between the second speed stage and the third speed stage, and a third and fourth speed switching valve, which controls the switching between the third speed stage and the fourth speed stage. In other words, the only difference is that the switching controls of these transmission switching valves are performed by electrically actuated means, such as solenoid valve means, based upon control judgements made by an electronic circuit, instead of according to the above described type of set of equilibrium relations between throttle hydraulic fluid pressure and governor hydraulic fluid pressure, etc., as in conventional hydraulic fluid pressure transmission control systems. Thus, according to this basic structure, in the case of a gear transmission mechanism which has four forward speed stages, as outlined above three transmission switching valves are required, and also three solenoid valves are required for controlling these three transmission switching valves.

As opposed to the above outlined basic structure for an electric transmission control system, it has been previously remarked upon that, since it is possible to achieve switching between two alternatives by using one switched valve, i.e. by using one combination of a transmission valve and an electric actuator such as a solenoid, then, by using a series combination of two such switched valves, it should in principle be possible to switch between four different combinations, according to the four possible combinations of switching available from two binary switching devices. This is based upon the fundamental concept that: 2 x 2 = 4.

In this case, certainly at first sight the structure appears simplified, because the number of shift valves is reduced to the absolute minimum of two. Such a form of transmission control system, for example, is disclosed in Japanese Patent Publication No. 5128/73.

However, in practice such a transmission control system is subject to a number of difficulties.

First, because the number of shift valves is reduced to two, and because these shift valves are required to switch various activating hydraulic fluid pressures to the various hydraulic fluid pressure activated friction engaging mechanisms for engaging four forward speed stages, the number of valve ports which must be controlled by the valve spool member of each of the shift valves is increased, as compared with the conventional case, and thereby the valve bores and the valve spool elements become rather elongated, causing difficulties in manufacture and assembly. Also, there is a danger of leakage of hydraulic fluid occurring between the various switched ports, which can hamper or even invalidate the performance of the functions of the hydraulic fluid pressure control system.

Second, other considerations arise with regard to the design of an automatic transmission control system, which need to be properly integrated with the basic design thereof, and which are particularly difficult to integrate with the operation of such an electric transmission control system as detailed above, in which only two transmission switching valves are used, which are switched to four possible switching position combinations, for selecting between four forward speeds. Two particularly important such considerations are as follows.

First, in an actual automatic transmission the switching between the various transmission speed stages needs to be performed not only according to the above explained types of relationships between, for instance, the current amount of depression of the vehicle accelerator pedal, and the current value of vehicle road speed, but also needs to be performed according to the set position of a transmission speed range selection control member, which is manually set by the driver of the vehicle to any one of a plurality of ranges of transmission speed stages, for instance "D" range, "3" range, "L" range, etc.. In some cases, indeed, the gear transmission mechanism should almost be forced to be in a particular speed stage.

Further, the operation of an electrical transmission control system is by its very nature likely to be more unreliable than that of a hydraulic fluid pressure transmission control system. That is to say, the electronic circuit which makes the control judgement as to which speed stage of the gear transmission mechanism should be currently provided may quite possibly suffer an electrical malfunction, or alternatively the power supply to this electronic circuit may fail. In either case, if it becomes impossible to operate the vehicle as a result of such a malfunction, severe problems will be caused. In other words, any electrical transmission control system should have a fail safe operational mode, in which, in the case of failure of the electronic part of the system, or in the case of failure of power supply thereto, the transmission of the vehicle can still be used, even if only in a cumbersome way.

**SUMMARY OF THE INVENTION**

Therefore, it is an object of the present invention to provide such a control system for an automatic transmission comprising such a gear transmission mechanism, in which the logical advantage obtained by the electrical switching of the transmission valves is utilized to the maximum, while on the other hand the above described problems are avoided.

It is a further object of the present invention to provide such a control system for an automatic transmission comprising such a gear transmission mechanism, in which the number of shift valves is minimized, while keeping good manufacturability and operability of the transmission control system.

It is a further object of the present invention to provide such a control system for an automatic transmission comprising such a gear transmission mechanism, in which, in particular, the number of electrically operated shift valves is minimized.

It is a further object of the present invention to provide such a control system for an automatic transmission comprising such a gear transmission mechanism, in which the valve bores and the valve elements are not unduly elongated.

It is a further object of the present invention to provide such a control system for an automatic transmission comprising such a gear transmission mechanism, in which the manufacture and assembly is easy.

It is a further object of the present invention to provide such a control system for an automatic transmission comprising such a gear transmission mechanism, in which no leakage of hydraulic fluid between the ports of the shift valves, such as could cause malfunctioning of the transmission control system, is liable to occur.

It is a yet further object of the present invention to provide such a control system for an automatic transmission comprising such a gear transmission mechanism, in which the operation of a manually actuated range selection valve is conveniently integrated with the operation of the transmission control system.

It is a yet further object of the present invention to provide such a control system for an automatic transmission comprising such a gear transmission mechanism, in which, in the case of failure of the electrical components of the system, it is still possible to operate the transmission by hand.

It is a yet further object of the present invention to provide such a control system for an automatic transmission comprising such a gear transmission mechanism, in which, in the case of failure of the operation of the electrical components of the system, it is possible to shift the gear transmission mechanism through various speed stages by operating a manual range selection valve, which in normal transmission operation is used for selecting various speed ranges for the automatic transmission.

It is a yet further object of the present invention to provide such a control system for an automatic transmission comprising such a gear transmission mechanism, and such a manual range selection valve, in which, in the case of failure of the operation of the electrical components of the system, it is possible to shift the gear transmission mechanism through enough of its speed stages, by operating the manual range selection valve, to ensure good operability of the vehicle incorporating the transmission.

According to the present invention, these and other objects are accomplished by, for a vehicle automatic transmission comprising a gear transmission mechanism which comprises a plurality of hydraulic fluid pressure activated friction engaging mechanisms and which provides a first forward speed stage, a second forward speed stage which is higher geared than said first forward speed stage, a third forward speed stage which is higher geared than said first and second forward speed stages, and a fourth forward speed stage which is higher geared than said first, second, and third forward speed stages, according to selective supply of hydraulic fluid pressure to said hydraulic fluid pressure activated friction engaging mechanisms: an electrically activated transmission control system, comprising: (a) a first electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either one of a certain two of said four forward speed stages, and its said second state so controlling supply of activating hydraulic fluid pressure to said hydraulic fluid pressure activated friction engaging mechanisms as to cause said gear transmission mechanism to provide either one of the other two of said four forward speed stages; and (b) a second electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either a one of said certain two of said forward speed stages, or a one of said other two of said four forward speed stages, and its said second state so controlling supply of activating hydraulic fluid pressure to said hydraulic fluid pressure activated friction engaging mechanisms as to cause said gear transmission mechanism to provide either the other one of said certain two of said four forward speed stages, or the other one of said other two of said four forward speed stages; **characterized by further comprising:** (c) a hydraulic fluid pressure activated switching valve, which is switched between a first state and a second state according to a first hydraulic fluid pressure which is controlled in relation to the switching operation of said first electrically activated switching valve system and also according to a second hydraulic fluid pressure which is controlled in relation to the switching operation of said second electrically activated switching valve system; (d) the switching of said hydraulic fluid pressure activated switching valve between its said first state and its said second state controlling supply of hydraulic fluid pressure to at least some of said hydraulic fluid pressure activated friction engaging mechanisms, so as to cause said gear transmission mechanism selectively to provide either a first particular one of said four forward speed stages, or another particular one of said four forward speed stages, according as to whether said hydraulic fluid pressure activated switching valve is in its said first state or is in its said second state.

According to this structure, the actual switching of the hydraulic fluid pressures which engage those of the friction engaging devices which cause the gear transmission mechanism to provide the first particular one and the another particular one of said four forward speed stages, i.e. the switching between these speed stages, is performed by the hydraulic fluid pressure activated switching valve, not directly by either of the two electrically activated switching valve systems. In fact, the logical determination as to which of these two speed stages should be engaged, the first particular one or the another particular one, is made at the electrical level, and is not performed according to any kind of balance of hydraulic forces on valve elements, as in conventional automatic transmission control systems. Based upon this decision, a particular combination of the first and the second electrically activated switching valve systems is supplied with actuating electrical energy – i.e., either both of them, one of them but not the other, the other of them but not the one, or neither of them – and thereby their respective switched states are produced, to which the values of said first and second hydraulic pressures correspond. These first and second hydraulic pressures are supplied to the hydraulic fluid pressure activated switching valve, and may switch it positively either to its first state to provide the first particular one of the speed stages, or to its second state to provide the another particular one of the speed stages, hydraulically, but according to the decision made at the electrical level.

According to a particular aspect of the present invention, further, the above described objects are achieved, more concretely, by, for a vehicle automatic transmission comprising a gear transmission mechanism which comprises a plurality of hydraulic fluid pressure activated friction engaging mechanisms and which provides a first forward speed stage, a second forward speed stage which is higher geared than said first forward speed stage, a third forward speed stage which is a directly connected speed stage and which is higher geared than said first and second forward speed stages, and a fourth forward speed stage which is an overdrive speed stage and which is higher geared than said first, second, and third forward speed stages, according to selective supply of hydraulic fluid pressure to said hydraulic fluid pressure activated friction engaging mechanisms: an electrically activated transmission control system, comprising: (a) a first electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either said first forward speed stage or said second forward speed stage, and its said second state so controlling supply of activating hydraulic fluid pressure to said hydraulic fluid pressure activated friction engaging mechanisms as to cause said gear transmission mechanism to provide either said directly connected third forward speed stage or said overdrive fourth forward speed stage; (b) a second electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either said second forward speed stage or said directly connected third forward speed stage, and its said second state so controlling supply of activating hydraulic fluid pressure to said hydraulic fluid pressure activated friction engaging mechanisms as to cause said gear transmission mechanism to provide either said first forward speed stage or said overdrive fourth forward speed stage; and (c) a hydraulic fluid pressure activated switching valve, which is switched between a first state and a second state according to a first hydraulic fluid pressure which is controlled in relation to the switching operation of said first electrically activated switching valve system and also according to a second hydraulic fluid pressure which is controlled in relation to the switching operation of said second electrically activated switching valve system; (d) the switching of said hydraulic fluid pressure activated switching valve between its said first state and its said second state controlling supply of hydraulic fluid pressure to at least some of said hydraulic fluid pressure activated friction engaging mechanisms, so as to cause said gear transmission mechanism selectively to provide either said directly connected third forward speed stage, or said overdrive fourth forward speed stage, according as to whether said hydraulic fluid pressure activated switching valve is respectively in its said first state or is in its said second state.

According to this particular structure, the hydraulic fluid pressure activated switching valve controls the switching between the third speed stage, which is a directly connected speed stage, and the fourth speed stage, which is an overdrive speed stage, and is switched by the first and the second hydraulic fluid pressures, which correspond to the switched states of the first and the second electrically activated switching valve systems.

In fact, the inventors of the present invention have envisaged both the case in which the first and the second hydraulic fluid pressures are switched by the switching action of the first and second electrically activated switching valve systems, i.e. are produced as final outputs of these valve systems, and the case in which the first and/or the second hydraulic fluid pressure is a pressure which is produced at an intermediate part of these electrically activated valve systems by an electrically operated device such as a solenoid valve for hydraulically switching the first and/or the second electrically activated switching valve system. Both of these possibilities are to be understood as included within the scope of the present invention.

Further, according to a yet more particular aspect of the present invention, the above described objects are yet more concretely achieved by, for a vehicle automatic transmission comprising a gear transmission mechanism which comprises a plurality of hydraulic fluid pressure activated friction engaging mechanisms and which provides a reverse driving stage, a first forward speed stage, a second forward speed stage which is higher geared than said first forward speed stage, a third forward speed stage which is a directly connected speed stage and which is higher geared than said first and second forward speed stages, and a fourth forward speed stage which is an overdrive speed stage and which is higher geared than said first, second, and third forward speed stages, according to selective supply of activating hydraulic fluid pressure to said hydraulic fluid pressure activated friction engaging mechanisms, said transmission also comprising a manual range selection valve which can be manually shifted to any one of a set of positions indicating "D" range, "3" range, "L" range, and "R" range, and which produces various combinations of output hydraulic fluid pressures according to its shifted position, including: a first output hydraulic fluid pressure which is output from said manual range selection valve when and only when said manual range selection valve is shifted either to its said position indicating "3" range or to its said position indicating "L" range; a second output hydraulic fluid pressure which is output from said manual range selection valve when and only when said manual range selection valve is shifted either to its said position indicating "D" range, to its said position indicating "3" range, or to its said position indicating "L" range; a third output hydraulic fluid pressure which is output from said manual range selection valve when and only when said manual range selection valve is shifted to its said position indicating "L" range; and a fourth output hydraulic fluid pressure which is output from said manual range selection valve when and only when said manual range selection valve is shifted to its said position indicating "R" range: an electrically activated transmission control system, comprising: (a) a first electrically activated switching valve system, comprising: (a1) a first solenoid valve which when and only when not electrically energized provides a first transferred hydraulic fluid pressure supply of said second output hydraulic fluid pressure; and (a2) a first switching valve which is switched between a first state and a second state, being biased towards its said second state

0040820

by said first transferred hydraulic fluid pressure, and being biased towards its said first state by supply of said third output hydraulic fluid pressure when said third output hydraulic fluid pressure is output from said manual range selection valve; said first switching valve not being switchingly biased by any other hydraulic fluid pressures; said first switching valve, when not biased by any hydraulic fluid pressures, being in its said first state; said first switching valve, when biased both towards its said first state and also towards its said second state, being in its said first state; and said first switching valve selectively controlling supply of activating hydraulic fluid pressure to at least some of said hydraulic fluid pressure activated friction engaging mechanisms, according to its switched state; (b) a second electrically activated switching valve system, comprising: (b1) a second solenoid valve which when and only when not electrically energized provides a second transferred hydraulic fluid pressure supply of said second output hydraulic fluid pressure; and (b2) a second switching valve which is switched between a first state and a second state, being biased towards its said second state by said second transferred hydraulic fluid pressure, and being biased towards its said first state by a fifth hydraulic fluid pressure switched by said first switching valve either from said second output hydraulic fluid pressure when said second output hydraulic fluid pressure is output from said manual range selection valve or from said fourth output hydraulic fluid pressure when said fourth output hydraulic fluid pressure is output from said manual range selection valve, said fifth hydraulic fluid pressure being present when and only when either said fourth output hydraulic fluid pressure is present and in addition said first switching valve is in its said first state, or said second output hydraulic fluid pressure is present and in addition said first switching valve is in its said second state; said second switching valve not being switchingly biased by any other hydraulic fluid pressures; said second switching valve, when not biased by any hydraulic fluid pressures, being in its said first state; said second switching valve, when biased both towards its said first state and also towards its said second state, being in its said first state; and said second switching valve selectively controlling supply of activating hydraulic fluid pressure to at least some of said hydraulic fluid pressure activated friction engaging mechanisms, according to its switched state; and (c) a hydraulic fluid pressure activated switching valve which is switched between a first state and a second state, being biased towards its said second state by said second transferred hydraulic fluid pressure, and being biased towards its said first state by said first output hydraulic fluid pressure and also by a supply of said second output hydraulic fluid pressure which is switched thereto by said first switching valve when and only when said second output hydraulic fluid pressure is output by said manual range selection valve and also said first switching valve is in its said first state; said hydraulic fluid pressure activated switching valve not being switchingly biased by any other hydraulic fluid pressures; said hydraulic fluid pressure activated switching valve, when not biased by any hydraulic fluid pressures, being in its said first state; said hydraulic fluid pressure activated switching valve, when biased both towards its said first state and also towards its said second state, being in its said first state; and said hydraulic fluid pressure activated switching valve selectively controlling supply of activating hydraulic fluid pressure to at least some of said hydraulic fluid pressure activated friction engaging mechanisms, according to its switched state; (d) with said manual range selection valve shifted to its said position indicating "D" range: the combination of said first and second solenoid valves being respectively in the energized and in the not energized states, said first switching valve being in its said first state, said second switching valve being in its said second state, and said hydraulic fluid pressure activated switching valve being in its said first state providing such a combination of activating hydraulic fluid pressures to said hydraulic fluid pressure activated friction engaging mechanisms of said gear transmission mechanism as to cause said gear transmission mechanism to provide its first speed stage; the combination of said first and second solenoid valves being both in their energized states, said first switching valve being in its said first state, said second switching valve being in its said first state, and said hydraulic fluid pressure activated switching valve being in its said first state providing such a combination of activating hydraulic fluid pressures to said hydraulic fluid pressure activated friction engaging mechanisms of said gear transmission mechanism as to cause said gear transmission mechanism to provide its second speed stage; the combination of said first and second solenoid valves being respectively in the not energized and in the energized states, said first switching valve being in its said second state, said second switching valve being in its said first state, and said hydraulic fluid pressure activated switching valve being in its said first state providing such a combination of activating hydraulic fluid pressures to said hydraulic fluid pressure activated friction engaging mechanisms of said gear transmission mechanism as to cause said gear transmission mechanism to provide its directly connected third speed stage; and the combination of said first and second solenoid valves being both in their not energized states, said first switching valve being in its said second state, said second switching valve being in its said first state, and said hydraulic fluid pressure activated switching valve being in its said second state providing such a combination of activating hydraulic fluid pressures to said hydraulic fluid pressure activated friction engaging mechanisms of said gear transmission mechanism as to cause said gear transmission mechanism to provide its overdrive fourth speed stage; wherein further: (h) the combination of said manual range selection valve being in its said position indicating "R" range, said first and second solenoid valves being both in their not energized states, said first switching valve being in its said first state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its reverse driving stage; (i) the combination of said manual range selection valve being in its said position indicating "L" range, said first and second solenoid valves being both in their not energized states, said first switching valve being in its said first state, said second switching valve being in its said second state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its first speed stage; (j) the combination of said manual range selection valve being in its said position indicating "3" range, said first and second solenoid valves being both in their not energized states, said first switching valve being in its said second state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its directly connected third speed stage; and (k) the combination of said manual range selection valve being in its said position indicating "D" range, said first and second solenoid valves being both in their not energized states, said first switching valve being in its said second state, said second switching valve being in its said first state, and said hydraulic fluid pressure activated switching valve being in its said second state provides such a combination of activating hydraulic fluid pressures to said hydraulic fluid pressure activated friction engaging mechanisms of said gear transmission mechanism as to cause said gear transmission mechanism to provide its overdrive fourth speed stage.

According to such a particular structure, if the electrical control device should fail, or if the supply of electrical power thereto should fail, then the first and the second solenoid valves will both be in the deenergized condition. In this case, an emergency operability of the transmission system is available as follows: when it is desired to engage the neutral stage, then the driver of the vehicle may move the manual range selection lever thereof to the "N" position; when it is desired to engage the reverse driving stage, then the driver of the vehicle may move the manual range selection lever thereof to the "R" position; when it is desired to engage the fourth speed stage, then the driver of the vehicle may move the manual range selection lever thereof to the "D" position; when it is desired to engage the third speed stage, then the driver of the vehicle may move the manual range selection lever thereof to the "3" position; and, when it is desired to engage the first speed stage, then the driver of the vehicle may move the manual range selection lever thereof to the "L" position. In other words, all the speed stages except the second speed stage can be manually engaged, in the event of an electrical failure of the transmission control system. This is a very useful fail safe operational mode capability, which is of great importance for the actual usability of a vehicle in an electrical failure situation, which must always be considered as a possibility.

**BRIEF DESCRIPTION OF THE DRAWINGS**

The present invention will now be shown and described with reference to a preferred embodiment thereof, and with reference to the illustrative

0040820

drawings. It should be clearly understood, however, that the description of the embodiment, and the drawings, are all of them given purely for the purposes of explanation and exemplification only, and are none of them intended to be limitative of the scope of the present invention in any way, since the scope of the present invention is to be defined solely by the legitimate and proper scope of the appended claims. In the drawings:

Fig. 1 is a schematic drawing, showing an example of a gear transmision mechanism of an automatic transmission, which is suitable to be controlled by a transmission control device according to the present invention, and also showing a torque converter incorporated in the automatic transmission; and

Fig. 2 is a hydraulic fluid pressure circuit diagram, showing a preferred embodiment of the transmission control system according to the present invention, which is used for controlling the gear transmission mechanism shown schematically in Fig. 1.

**DESCRIPTION OF THE PREFERRED EMBODIMENT**

Now, the present invention will be explained with respect to a particular embodiment thereof, and with reference to the accompanying drawings.

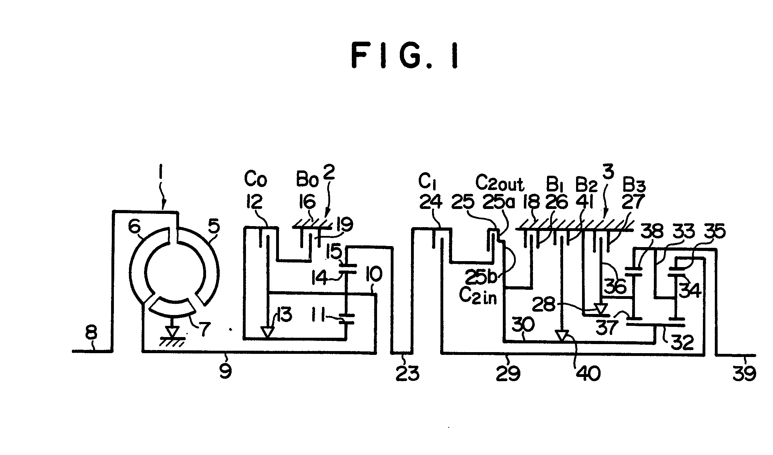

In Fig. 1 there is shown a schematic structural diagram of an automatic transmission system, including an overdrive mechanism, which is controlled by a preferred embodiment of the transmission control system according to the present invention. This automatic transmission system, in its general structure, comprises a torque converter 1, an overdrive mechanism 2, and a gear transmission mechanism 3. The overdrive mechanism 2 comprises a plurality of hydraulic fluid pressure activated friction engaging mechanisms which will be described later, and, according to selective supply of hydraulic fluid pressure to these hydraulic fluid pressure activated friction engaging mechanisms, can provide either a directly connected speed stage or an overdrive speed stage which is higher geared than said directly connected speed stage. The gear transmission mechanism 3 comprises a plurality of hydraulic fluid pressure activated friction engaging mechanisms which will be described later, and, according to selective supply of hydraulic fluid pressure to these hydraulic fluid pressure activated friction engaging mechanisms, can provide either one of a first forward speed stage, a second forward speed stage which is higher geared than said first forward speed stage, a third forward speed stage which is higher geared than said first and second forward speed stages and in fact in the shown exemplary gear transmission mechanism 3 is a directly connected speed stage, and a reverse speed stage. Therefore, as a whole, the automatic transmission system shown here can provide any one of four forward speed stages including a directly connected third speed stage and an overdrive fourth overdrive speed stage, or a reverse speed stage.

Now the torque converter 1 will be described. This torque converter 1 is of a per se well known sort, and comprises a pump impeller 5, a turbine 6, and a stator 7. The stator 7 is mounted, via a one way brake, so as to be freely rotatable (in a preferred direction of rotation) with respect to the body of the torque converter 1. The pump impeller 5 is connected to an input shaft 8 of the torque converter 1, and this input shaft 8, in fact, during use of this automatic transmission system, is connected to a crankshaft of an internal combustion engine, not shown in the figures, so as to receive input of rotational power therefrom. The turbine 6 is connected to a turbine shaft 9, which serves as a power output shaft for the torque converter 1.

The overdrive mechanism 2 will now be described. This overdrive mechanism 2 comprises an overdrive casing 16, and the turbine shaft 9 serves as a power input shaft to transmit rotational power from the torque converter 1 to the overdrive mechanism 2. This turbine shaft 9 is connected to a carrier 10 of a planetary gear mechanism of the overdrive mechanism 2, and on the carrier 10 there is rotatably mounted a planetary pinion 14 (of course, in fact, several planetary pinions such as 14 are incorporated in this planetary gear mechanism, but only one of them is schematically shown in Fig. 1), and this planetary pinion 14 rotates in a per se conventional way around a sun gear 11. The outside of the planetary pinion 14 is meshed with a ring gear 15. Between the sun gear 11 and the carrier 10 there are provided, in parallel, a one way clutch 13 and a multi plate clutch ($C_0$) 12, for selectively rotationally connecting them together, and, further, between the sun gear 11 and the casing 16 of the overdrive mechanism 2 there is provided a multi plate brake ($B_0$) 19, for selectively rotationally connecting them together. The multi plate clutch 12 and the multi plate brake 19 are both of them constituted as hydraulic fluid pressure activated friction engaging mechanisms, and are both of them adapted to be selectively engaged and disengaged by selective supply of hydraulic fluid pressure thereto from the preferred embodiment of the transmission control system according to the present invention, as will be explained later. The ring gear 15 is connected to a shaft 23, which serves as the power output shaft of the overdrive mechanism 2.

Now, the gear transmission mechanism 3 will be described. This gear transmission mechanism 3 comprises a gear transmission mechanism casing 18, and the shaft 23 serves as a power input shaft for the gear transmission mechanism 3. A multi plate clutch ($C_1$) 24 is provided between the shaft 23 and an intermediate shaft 29, for selectively rotationally connecting them together, and a multi plate clutch 25 is also provided between the shaft 23 and a sun gear shaft 30, for selectively rotationally connecting them together. In fact, in the shown construction, this multi plate clutch 25 is made up from an outer clutch ($C_2$ out) 25a and an inner clutch ($C_2$ in) 25b, and, as will be seen later, when any forward gear speed stage of the gear transmission mechanism 3 is engaged then only at most the outer clutch 25a of the multi plate clutch 25 is engaged, whereas on the other hand when the reverse gear speed stage of the gear transmission 3 is engaged both the outer clutch 25a and the inner clutch 25b of the multi plate clutch 25 are engaged, in order to transmit a sufficiently high torque amount. A multi plate brake ($B_1$) 26 is provided between the sun gear shaft 30 and the transmission casing 18, for selectively rotationally engaging them together. Between the sun gear shaft 30 and the transmission casing 18, further, in series, there are provided a one way clutch 40 and a multi plate brake ($B_2$) 41, for selectively rotationally engaging them together in one rotational direction only.

A sun gear 32 of considerable axial length is provided on the sun gear shaft 30, and this sun gear 32 is used in two separate planetary gear mechanisms, which are axially spaced along the axis of said sun gear 32. In the first planetary gear mechanism, a carrier 33 carries a planetary pinion 34 (actually, of course, again in fact a plurality of such planetary pinions 34 are provided, but only one is schematically shown in Fig. 1) which is meshed at its inside with the sun gear 32, and at its outside with a ring gear 35. In the second planetary gear mechanism, a carrier 36 carries a planetary pinion 37 (actually, again, a plurality of such planetary pinions 37) which is meshed at its inside with the sun gear 32, and at its outside with a ring gear 38. The ring gear 35 of the first planetary gear mechanism is connected to the aforesaid intermediate shaft 29. The carrier 33 of this first planetary gear mechanism is connected to the ring gear 38 of the second planetary gear mechanism, and both of these elements are connected to a power output shaft 39 of the gear transmission mechanism 3, said power output shaft 39 leading to the driven wheels of the vehicle to which the shown automatic transmission is fitted. Further, between the carrier 36 of the second planetary gear mechanism and the transmission casing 18 there are provided, in parallel, a multi plate brake $(B_3)$ 27 for selectively engaging them together, and a one way brake 28.

Again, the multi plate clutch 24, the outer and inner clutches 25a and 25b of the multi plate clutch 25, and the multi plate brakes 26, 27, and 41 are constituted as hydraulic fluid pressure activated friction engaging mechanisms, and are adapted to be selectively engaged and disengaged by selective supply of hydraulic fluid pressure thereto from the preferred embodiment of the transmission control system according to the present invention, as will be explained later, and by this selective engagement and disengagement of the various hydraulic fluid pressure activated multi plate clutches and brakes the combination of the overdrive mechanism 2 and the gear transmission mechanism 3 is set to its various forward speed stages, which are: a first speed stage, a second speed stage which is higher geared than said first speed stage, a third speed stage which is higher geared than said first and second speed stages and which is a directly connected speed stage, and a fourth speed stage which is higher geared than said directly connected speed stage and which is an overdrive speed stage. The combinations of the clutches and brakes, described above, which should be engaged and disengaged, in order to provide each of the above described speed stages from the overdrive mechanism 2 and the gear transmission mechanism 3, are shown in the appended Table, and will be more particularly described and explained hereinafter.

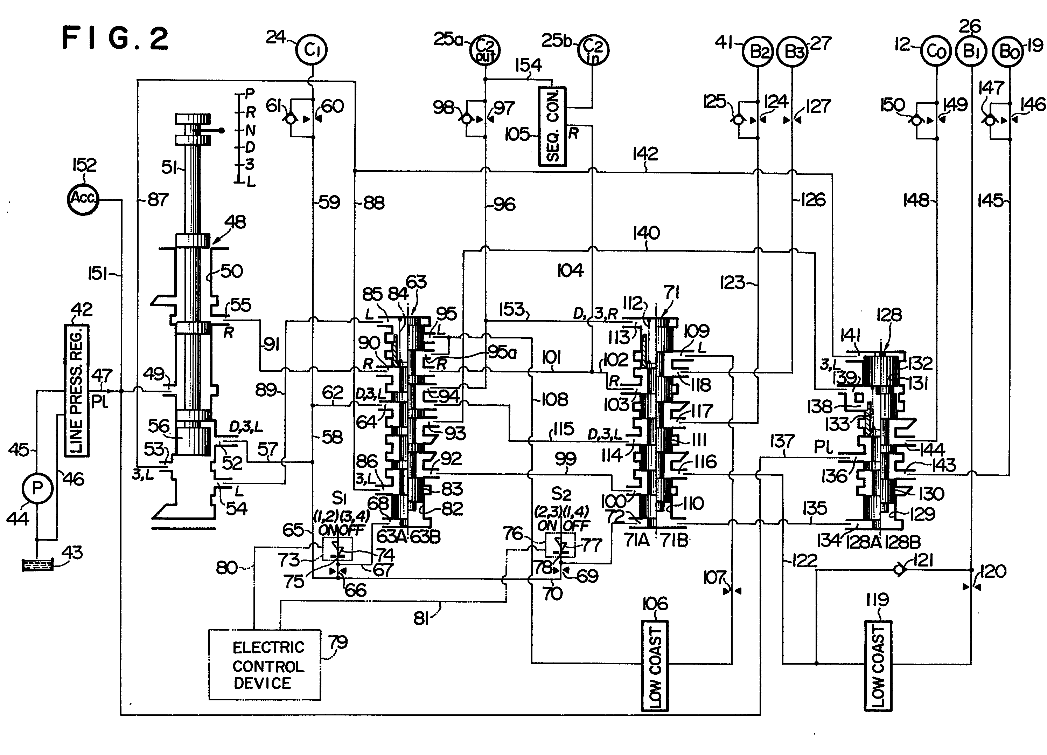

Fig. 2 shows a control system for the automatic transmission system whose large scale mechanical components have been described above, said control system shown being a preferred embodiment of the transmission control system according to the present invention. This figure is a schematic hydraulic circuit, and therein each of the hydraulically activated clutches and brakes described above is shown in the form of a block denoted by the same reference numeral as was used for that element in Fig. 1.

In this preferred embodiment of the transmission control system according to the present invention, the reference numeral 44 denotes a hydraulic fluid pump, which sucks in hydraulic fluid from a hydraulic fluid reservoir 43 and outputs a supply of compressed hydraulic fluid to a hydraulic fluid conduit 45. A per se well known line hydraulic fluid pressure control valve 42 receives this supply of compressed hydraulic fluid from the conduit 45, and regulates said supply to produce a supply of hydraulic fluid which is controlled to a predetermined line hydraulic fluid pressure level P1 at its output port which is connected to a hydraulic fluid conduit 47, while releasing a part of the compressed hydraulic fluid supplied by the hydraulic fluid pump 44 back to the hydraulic fluid reservoir 43 through a conduit 46. The hydraulic fluid conduit 47 leads a supply of the line hydraulic fluid pressure P1 to an input port 49 of a manual range selection valve 48.

This manual range selection valve 48 is of a per se well known sort, and comprises a housing member within which there is formed a bore 50, and a valve spool member 51 which is connected to a member which is moved by the hand of the operator of the vehicle to which this automatic transmission is fitted, said valve spool member 51 being thus slidingly reciprocated within the bore 50. This valve spool member 51 may be positioned to any one of the following switching positions: a "P" position for parking operation, a "R" position for reverse driving operation, a "N" position for neutral operation, a "D" position for drive range operation, a "3" position for third range operation, and a "L" position for low range operation. According to the switching position to which the valve spool member 51 is positioned, the line hydraulic fluid pressure P1 which is supplied to the input port 49 of the manual range selection valve 48 is transmitted to various output ports thereof.

In more detail, when the valve spool member 51 of the manual range selection valve 48 is switched to the "P" or parking position, then a land 56 thereof closes the input port 49, and accordingly the line hydraulic fluid pressure P1 which is supplied to the input port 49 is not transmitted to any of the output ports of the manual range selection valve 48. When the valve spool member 51 is switched to the "R" or reverse position, then the line hydraulic fluid pressure Pl supplied to the input port 49 is transmitted only to the output port 55 of the manual range selection valve 48. When the spool 51 is switched to the "N" or neutral position, as seen in Fig. 2, then the line hydraulic fluid pressure Pl supplied to the input port 49 is not transmitted to any of the output ports. When the spool 51 of the manual range selection valve 48 is switched to the "D" or drive range position, then the line hydraulic fluid pressure Pl supplied to the input port 49 is transmitted only to the output port 52. When the spool 51 is switched to the "3" or third range position, then the line hydraulic fluid pressure Pl supplied to the input port 49 is transmitted both to the output port 52 and to the output port 53. Finally, when the spool 51 is switched to the "L" or low range position, then the line hydraulic fluid pressure Pl supplied to the input port 49 is transmitted to the output port 52, the output port 53, and the output port 54. These pressure transmission conditions are shown in Fig. 2 by the appropriate characters "D", "3", "L", and "R" beside the relevant ports, and also beside various other ports of other shift valves.

When the spool 51 of the manual range selection valve 48 is switched to the "D" position, the "3" position, or the "L" position, then the line hydraulic fluid pressure Pl which appears at its output port 52 is supplied via a hydraulic fluid conduit 57, a hydraulic fluid conduit 58, and a hydraulic fluid conduit 59 to the multi plate clutch 24, so as to engage said multi plate clutch 24. At an intermediate point of the hydraulic fluid conduit 59 there is provided a throttle element 60 in parallel with a one way valve 61, and this arrangement is in order to adjust the timing of the engagement and the disengagement of the multi plate clutch 24, in a per se well known way.

Further, when the manual range selection valve 48 is switched to the "D" position, the "3" position, or the "L" position, the line hydraulic fluid pressure Pl which appears at the port 52 thereof is also conducted, via the hydraulic fluid conduit 57, the hydraulic fluid conduit 58, and a hydraulic fluid conduit 62, to a port 64 of a first switching valve 63. Yet further, this line hydraulic fluid pressure Pl which appears at the port 52 of the manual range selection valve 48 is also conducted, via the hydraulic fluid conduit 57, a hydraulic fluid conduit 65, and a hydraulic fluid conduit 67, to a control port 68 of said first switching valve 63. And yet further, this line hydraulic fluid pressure Pl which appears at the port 52 of the manual range selection valve 48 is also conducted, via the hydraulic fluid conduit 57, the hydraulic fluid conduit 65, and a hydraulic fluid conduit 70, to a control port 72 of a second switching valve 71.

At an intermediate point of the hydraulic fluid conduit 67 which conducts this line hydraulic fluid pressure Pl to the control port 68 of the first switching valve 63, there is provided a throttle element 66, and, at an intermediate point of the hydraulic fluid conduit 70 which conducts the line hydraulic fluid pressure Pl to the control port 72 of the second switching valve 71, there is provided another throttle element 69. To an intermediate point of the hydraulic fluid conduit 67, downstream of the throttle element 66 therein, there is connected a drain port 75, and to an intermediate point of the hydraulic fluid conduit 70, downstream of the throttle element 69 therein, there is connected another drain port 78. The opening and closing of the drain port 75 is controlled by a valve element 74 of a first solenoid valve ($S_1$) 73, and the opening and closing of the drain port 78 is controlled by a valve element 77 of a second solenoid valve ($S_2$) 76.

Accordingly, therefore, when actuating electrical energy is not supplied to the solenoid (not shown) of the first solenoid valve 73, then said solenoid does not attract the valve element 74, and accordingly said valve element 74 is allowed to be biased by a biasing means such as a spring or the like (again not shown) against the drain port 75, and as a result the line hydraulic fluid pressure Pl which is present in the hydraulic fluid conduit 67 is effectively conveyed to the control port 68 of the first switching valve 63. On the other hand, when actuating electrical energy is supplied to the solenoid of the first solenoid valve 73, then said solenoid attracts the valve element 74, and accordingly said valve element 74 is pulled against the biasing action of said biasing means such as a spring away from the drain port 75, and as a result the line hydraulic fluid pressure Pl which is present at the output port 52 of the manual range selection valve 48, and which is conducted through the hydraulic fluid conduit 57, the hydraulic fluid conduit 65, and into the hydraulic fluid conduit 67, is not substantially conducted through the hydraulic fluid conduit 67 downstream of the point thereof to which the drain port 75 is communicated to be supplied to the control port 68 of the first switching valve 63, but is vented through the drain port 75, and accordingly the control port 68 of the first switching valve 63 is not supplied with any substantial hydraulic fluid pressure.

Similarly, when actuating electrical energy is not supplied to the solenoid (not shown) of the second solenoid valve 76, then said solenoid does not attract the valve element 77, and accordingly said valve element 77 is allowed to be biased by a biasing means such as a spring or the like (again not shown) against the drain port 78, and as a result the line hydraulic fluid pressure Pl which is present in the hydraulic fluid conduit 70 is effectively conveyed to the control port 72 of the second switching valve 71. On the other hand, when actuating electrical energy is supplied to the solenoid of the second solenoid valve 76, then said solenoid attracts the valve element 77, and accordingly said valve element 77 is pulled against the biasing action of said biasing means such as a spring away from the drain port 78, and as a result the line hydraulic fluid pressure Pl which is present at the output port 52 of the manual range selection valve 48, and which is conducted through the hydraulic fluid conduit 57, the hydraulic fluid conduit 65, and into the hydraulic fluid conduit 70, is not substantially conducted through the hydraulic fluid conduit 70 downstream of the point thereof to which the drain port 78 is communicated to be supplied to the control port 72 of the second switching valve 71, but is vented through the drain port 78, and accordingly the control port 72 of the second switching valve 71 is not supplied with any substantial hydraulic fluid pressure.

As will be explained later, supply of the line hydraulic fluid pressure Pl to the control port 68 of the first switching valve 63 may positively switch said first switching valve 63, i.e., may bias its valve element 83 in a particular direction; and, similarly, supply of the line hydraulic fluid pressure Pl to the control port 72 of the second switching valve 71 may positively switch said second switching valve 71, i.e., may bias its valve element 83 in a particular direction. Actuating electrical energy is selectively supplied via signal lines 80 and 81 respectively to the first and second solenoid valves 73 and 76 from an electric control device 79, which in the shown preferred embodiment of the transmission control system according to the present invention is incorporated in a computer. This electric control device 79 decides which particular speed stage of the automatic transmission system, of course within the range of speed stages which is currently set upon the manual range selection valve 48, should desirably be engaged at any particular time, basing its decision upon the

- 25 -                                              0040820

current values of various operating parameters of the vehicle which incorporates the automatic transmission system, such as, for example, the current vehicle road speed, the current load upon the vehicle internal combustion engine, and the like.

In fact, in the shown preferred embodiment of the transmission control system according to the present invention, the electric control device 79 supplies actuating electrical energy to the first solenoid valve 73, when it is desired to engage either the first forward speed stage or the second forward speed stage of the automatic transmission system, and does not supply actuating electrical energy to the first solenoid valve 73, when it is desired to engage either the third forward speed stage (i.e. the directly connected speed stage) or the fourth forward speed stage (i.e. the overdrive speed stage) of the automatic transmission system; and, further, the electric control device 79 supplies actuating electrical energy to the second solenoid valve 76, when it is desired to engage either the second forward speed stage or the third forward speed stage (i.e. the directly connected speed stage) of the automatic transmission system, and does not supply actuating electrical energy to the second solenoid valve 73, when it is desired to engage either the first forward speed stage or the fourth forward speed stage (i.e. the overdrive speed stage) of the automatic transmission system. In other words, when it is desired to engage the first speed stage of the automatic transmission system, then the electric control device 79 supplies actuating electrical energy to the first solenoid valve 73, but does not supply actuating electrical energy to the second solenoid valve 76; when it is desired to engage the second speed stage of the automatic transmission system, then the electric control device 79 supplies actuating electrical energy to the first solenoid valve 73, and also supplies actuating electrical energy to the second solenoid valve 76; when it is desired to engage the third speed stage (i.e. the directly connected speed stage) of the automatic transmission system, then the electric control device 79 does not supply actuating electrical energy to the first solenoid valve 73, but supplies actuating electrical energy to the second solenoid valve 76; and, when it is desired to engage the fourth speed stage (i.e. the overdrive stage) of the automatic transmission system, then the electric control device 79 does not supply actuating electrical energy to the first solenoid valve 73, and does not supply actuating electrical energy to the second solenoid valve 76 either. Further, in conclusion, when it is desired to engage the automatic transmission system to its parking condition, its neutral condition, or its reverse condition, then, again, the electric control device 79 does not supply actuating electrical energy to the first solenoid valve 73, and does not supply actuating electrical energy to the second solenoid valve 76 either.

Now, the first switching valve 63 will be described. This valve 63 comprises a housing portion in which a bore designated by the reference numeral 82 is formed, and a spool shaped valve element 83 slides reciprocatingly within this bore 82, in the upward and downward directions as seen in the figure. This valve element 83 is shown as shifted to its downwards position as seen in Fig. 2 within the bore 82 in the part of Fig. 2 to the left of the central axis of the bore 82, and is there designated by the reference numeral 63A; and, similarly, the valve element 83 is shown as shifted to its upwards position as seen in Fig. 2 within the bore 82 in the part of Fig. 2 to the right of the central axis of the bore 82, and is there designated by the reference numeral 63B. A compression coil spring 84, provided within the bore 82, biases the valve element 83 downwards, as seen in Fig. 2, towards its downwardly shifted position 63A within the valve bore 82 as seen to the left of the central axis of the bore 82 in Fig. 2.

The control ports 68 and 85 of the first switching valve 63 open respectively to chambers which are formed at the bottom and the top as seen in Fig. 2 of the valve bore 82 of said first switching valve 63, and accordingly hydraulic fluid pressure, when said hydraulic fluid pressure is supplied to either of these control ports 68 or 85, biases the valve element 83 of said first switching valve 63 in the upwards or the downwards direction respectively as seen in Fig. 2 within the valve bore 82. The input ports 64, 86, and 90 of the first switching valve 63, on the other hand, open between lands formed on the side of the valve bore 82, and accordingly hydraulic fluid pressure, when supplied to these input ports 64, 86, and 90 does not substantially bias the valve element 83 axially within the valve bore 82; but on the contrary, as the valve element 83 moves within the valve bore 82 between its downwardly shifted position 63A within the valve bore 82 as seen to the left of the central axis of the valve 82 in Fig. 2 and its upwardly shifted position 63B within the valve bore 82 as seen to the right of the central axis of the valve bore 82 in Fig. 2, these hydraulic fluid pressures, when supplied, are selectively supplied to various output ports of the first switching valve 63, as will be explained later.

In more detail, according to the biasing action of the compression coil spring 84, when the line hydraulic fluid pressure Pl is supplied to the control port 68 of the first switching valve 83, but is not supplied to the control port 85 thereof, then according to the pressure that thereby is exerted on the lower end in Fig. 2 of the valve element 83, this valve element 83 is switched to its upwardly shifted position 63B, against the biasing action of the compression coil spring 84 which is overcome. On the other hand, the valve element 83 is switched to its downwardly shifted position 63A, with the aid of the biasing action of the compression coil spring 84, in the following three cases: when line hydraulic fluid pressure Pl is not supplied to either of the control ports 68 and 85 of the first switching valve 63; when line hydraulic fluid pressure Pl is supplied to both of the control ports 68 and 85; and when line hydraulic fluid pressure Pl is supplied to the control port 85, but is not supplied to the control port 68.

As mentioned previously, the control port 68 receives supply of the line hydraulic fluid pressure Pl, via the hydraulic fluid conduit 67, when and only when the valve spool member 51 of the manual range selection valve 48 is set to either the "D" range, the "3" range, or the "L" range, and also the first solenoid valve 73 is not supplied with actuating electrical energy. Further, the control port 85 of the first switching valve 63 receives supply of the line hydraulic fluid pressure Pl, via a hydraulic fluid conduit 89 and the output port 54 of the manual range selection valve 48, when and only when the valve spool member 51 of the manual range selection valve 48 is switched to the "L" position. Accordingly, the valve element 83 of the first switching valve 63 is switched to its upwardly shifted position 63, when and only when both the valve spool member 51 of the manual range selection valve 48 is switched to the "D" position or to the "3" position, and also the first solenoid valve 73 is not supplied with actuating electrical energy, and at all other times the valve element 83 is switched to its downwardly shifted position 63A.

The hydraulic fluid pressures which are switched by the first switching valve 63 are supplied as will now be explained. When the valve spool member 51 of the manual range selection valve 48 is switched to the "D" position, the "3" position, or the "L" position, then the line hydraulic

- 28 -

0040820

fluid pressure Pl which appears at the output port 52 thereof is conducted, via the hydraulic fluid conduit 57, the hydraulic fluid conduit 58, and the hydraulic fluid conduit 62, to the input port 64 of the first switching valve 63. When the valve spool member 51 of the manual range selection valve 48 is switched to the "3" position or the "L" position, then the line hydraulic fluid pressure Pl which appears at the output port 53 thereof is conducted, via a hydraulic fluid conduit 87 and a hydraulic fluid conduit 88, to the input port 86 of the first switching valve 63. And, when the valve spool member 51 of the manual range selection valve 48 is switched to the "R" position, then the line hydraulic fluid pressure Pl which appears at the output port 55 thereof is conducted, via a hydraulic fluid conduit 91, to the input port 90 of the first switching valve 63.

These hydraulic fluid pressures are switched as follows. When the valve element 83 of the first switching valve 63 is in its downwardly shifted position 63A, then: the input port 64 is communicated to the output port 93, the input port 86 is communicated to the output port 92, the input port 90 is communicated to the output port 94, and the input port 85 is communicated to the output port 95. On the other hand, when the valve element 83 of the first switching valve 63 is in its upwardly shifted position 63B, then: the input port 64 is communicated to the output port 94, the input port 86 is not communicated to any output port, the input port 90 is communicated to the output port 95a, the input port 85 is not communicated to any output port, and the output ports 92 and 93 are communicated to drain ports.

The output ports of the first switching valve 63 are connected as follows. The output port 94 is connected to a hydraulic fluid conduit 96 which leads to the outer clutch 25a of the multi plate clutch 25, and at an intermediate point of this hydraulic fluid conduit 96 there are provided a throttle element 97 and a one way valve 98 in parallel, in order to adjust the timing of the engagement and the disengagement of the outer clutch 25a, in a per se well known way. Further, from an intermediate point of the hydraulic fluid conduit 96 upstream of the throttle element 97 there branches a hydraulic fluid conduit 153, which communicates the hydraulic fluid pressure present in this part of the hydraulic fluid conduit 96 to a control port 112 of the second switching valve 71. The output port 92 of the first switching valve 63 is communicated, via a hydraulic fluid conduit 99, to an input port 100 of the second switching valve 71. The output ports 95 and 95a of the first switching valve 63 are connected together, and are communicated, via a hydraulic fluid conduit 108, to an input port 109 of the second switching valve 71, and at an intermediate part of this hydraulic fluid conduit 108 there are provided, in series in that order, a low coast valve 106 which is per se well known in its structure and function, and a throttle element 107. The output port 93 of the first switching valve 63 is communicated, via a hydraulic fluid conduit 140, to a pair of control ports 138 and 139 of a third/overdrive switching valve 128 which will be described in detail later. And, further, the input port 90 of the first switching valve 63 is directly communicated at all times, via a hydraulic fluid conduit 101 and a hydraulic fluid conduit 102, to an input port 103 of the second switching valve 71, and is also communicated, via said hydraulic fluid conduit 101 and a hydraulic fluid conduit 104, to the inner clutch 25b of the multi plate clutch 25. At an intermediate point of the hydraulic fluid conduit 104 there is provided a sequence control valve 105. This sequence control valve 105 is controlled in a per se well known way, by the hydraulic fluid pressure present within the hydraulic fluid conduit 96 downstream of the throttle element 97, which is communicated thereto via a hydraulic fluid conduit 154, so as to allow supply of hydraulic fluid pressure to the inner clutch 25b of the multi plate clutch 25, when the hydraulic fluid pressure being supplied to the outer clutch 25a thereof exceeds a certain predetermined value.

Now, the second switching valve 71 will be described. This valve 71 comprises a housing member in which a bore designated by the reference numeral 110 is formed, and a spool shaped valve element 111 slides reciprocatingly within this bore 110, in the upward and downward directions as seen in the figure. This valve element 111 is shown as shifted to its downwards position as seen in Fig. 2 within the bore 110 in the part of Fig. 2 to the left of the central axis of the bore 110, and is there designated by the reference numeral 71A; and, similarly, the valve element 111 is shown as shifted to its upwards position as seen in Fig. 2 within the bore 110 in the part of Fig. 2 to the right of the central axis of the bore 110, and is there designated by the reference numeral 71B. A compression coil spring 112, provided within the bore 110, biases the valve element 111 downwards, as seen in Fig. 2, towards its downwardly shifted position 71A.

The control ports 72 and 113 of the second switching valve 71 open respectively to chambers which are formed at the bottom and the top as seen in Fig. 2 of the valve bore 110 of said second switching valve 71, and accordingly hydraulic fluid pressure, when said hydraulic fluid pressure is supplied to either of these control ports 72 or 113, biases the valve element 111 of said second switching valve 71 in the upwards or the downwards direction respectively as seen in Fig. 2 within the valve bore 110. The input ports 114, 100, and 103 of the second switching valve 71, on the other hand, open between lands formed on the side of the valve bore 110, and accordingly hydraulic fluid pressure, when supplied to these input ports 114, 100, and 103, does not substantially bias the valve element 111 axially within the valve bore 110; but on the contrary, as the valve element 111 moves within the valve bore 110 between its downwardly shifted position 71A and its upwardly shifted position 71B, these hydraulic fluid pressures, when supplied, are selectively supplied to various output ports of the second switching valve 71, as will be explained later.

In more detail, according to the biasing action of the compression coil spring 112, when the line hydraulic fluid pressure Pl is supplied to the control port 72 of the second switching valve 111, but is not supplied to the control port 113 thereof, then according to the pressure that thereby is exerted on the lower end in Fig. 2 of the valve element 111, this valve element 111 is switched to its upwardly shifted position 71B, against the biasing action of the compression coil spring 112 which is overcome. On the other hand, the valve element 111 is switched to its downwardly shifted position 71A, with the aid of the biasing action of the compression coil spring 112, in the following three cases: when line hydraulic fluid pressure Pl is not supplied to either of the control ports 72 and 113 of the second switching valve 71; when line hydraulic fluid pressure Pl is supplied to both of the control ports 72 and 113; and when line hydraulic fluid pressure Pl is supplied to the control port 113, but is not supplied to the control port 72.

As mentioned previously, the control port 72 receives supply of the line hydraulic fluid pressure Pl, via the hydraulic fluid conduit 70, when and only when the valve spool member 51 of the manual range selection valve 48 is set to the "D" position, the "3" position, or the "L" position, and also the second solenoid valve 76 is not supplied with actuating electrical energy. Further, the control port 113 of the second switching valve 71 receives supply of the line hydraulic fluid pressure Pl, via the hydraulic fluid conduit 153, from the output port 94 of the first switching valve 63, both when the valve spool member 51 of the manual range selection valve 48 is switched to the "R" position, in which case the valve element 83 of the first switching valve 63 will always be in its downwardly shifted position 63A, and accordingly the input port 90 will be connected to the output port 94, and also when the valve spool member 51 of the manual range selection valve 48 is set to the "D" position, the "3" position, or the "L" position, and the valve element 83 of the first switching valve 63 is in its upwardly shifted position 63B, in which case the input port 64 is communicated to the output port 94; i.e., when the valve spool member is set to the "D" position or the "3" position and also the solenoid valve 73 is not supplied with actuating electrical energy. Accordingly, the valve element 111 of the second switching valve 71 is switched to its upwardly shifted position 71B, when and only when the valve spool element 51 of the manual range selection valve 48 is switched to either the "D" position or the "3" position, the first solenoid valve 73 is supplied with actuating electrical energy, and the second solenoid valve 76 is not supplied with actuating electrical energy, or the valve spool member 51 of the manual range selection valve 48 is switched to the "L" position and the second solenoid valve 76 is not supplied with actuating electrical energy; and at all other times the valve element 111 is switched to its downwardly shifted position 71A.

The hydraulic fluid pressures which are switched by the second switching valve 71 are supplied as will now be explained. When the valve spool member 51 of the manual range selection valve 48 is switched to the "D" position, the "3" position, or the "L" position, then the line hydraulic fluid pressure Pl which appears at the output port 52 thereof is conducted, via the hydraulic fluid conduit 57, the hydraulic fluid conduit 58, the hydraulic fluid conduit 62, the port 64 of the first switching valve 63, and the hydraulic fluid conduit 115, to the input port 114 of the second switching valve 71. When the valve spool member 51 of the manual range selection valve 48 is switched to the "3" position or the "L" position, and in addition the valve element 83 of the first switching valve 63 is switched to its downwardly shifted position 63A, then the line hydraulic fluid pressure Pl which appears at the output port 53 of the manual range selection valve 48 is conducted, via the hydraulic fluid conduit 87, the hydraulic fluid conduit 88, the input port 86 of the first switching valve 63, the output port 92 of the first switching valve 63, and the hydraulic fluid conduit 99, to the input port 100 of the second switching valve 71. And, when the valve spool member 51 of the manual range selection valve 48 is switched to the "R" position, then the line hydraulic fluid pressure Pl which appears at the output port 55 thereof is conducted, via the hydraulic fluid conduit 91, the input port 90 of the first switching valve 63, and the hydraulic fluid conduit 101, to the input port 103 of the second switching valve 71. The input port 109 of the second switching valve 71, further, is communicated to the output ports 95 and 95a of the first switching valve 63, which are connected together, via the hydraulic fluid conduit 108, and as mentioned before at an intermediate part of this hydraulic fluid conduit 108 there are provided in series the aforesaid low coast valve 106 and the throttle element 107.

These hydraulic fluid pressures are switched as follows. When the valve element 111 of the second switching valve 71 is in its downwardly shifted position 71A, then: the input port 114 is communicated to the output port 117, the input port 100 is communicated to the output port 116, the input port 103 is communicated to the output port 118, and the input port 109 is not communicated to any output port. On the other hand, when the valve element 111 of the second switching valve 71 is in its upwardly shifted position 71B, then none of the input ports 114, 100, and 103 is communicated to any output port, and the output ports 116 and 117 are communicated to drain ports, while the input port 109 is communicated to the output port 118.

The output ports of the second switching valve 71 are connected as follows. The output port 117 is connected to a hydraulic fluid conduit 123 which leads to the multi plate brake 41, and at an intermediate point of this hydraulic fluid conduit 123 there are provided a throttle element 124 and a one way valve 125 in parallel, in order to adjust the timing of the engagement and the disengagement of the multi plate brake 41, in a per se well known way. The output port 118 is connected to a hydraulic fluid conduit 126 which leads to the multi plate brake 27, and at an intermediate point of this hydraulic fluid conduit 126 there is provided a throttle element 127, in order to adjust the timing of the engagement and the disengagement of the multi plate brake 27, in a per se well known way. The output port 116 is connected to a hydraulic fluid conduit 122 which leads to the multi plate brake 26, and at an intermediate point of this hydraulic fluid conduit 122 there is provided a parallel connection of a one way valve 121 and a series connection of a second coast valve 119 and a throttle element 120; in other words, the second coast valve 119 and the throttle element 120 are connected in series, and the one way valve 121 is connected in parallel with them, the entire combination being interposed at said intermediate point of the hydraulic fluid conduit 122. Again, this arrangement is per se well known in the art. Finally, the line hydraulic fluid pressure Pl which is present, as previously explained, at the control port 72 of the second switching valve 71, when the second solenoid valve 76 is not supplied with actuating electrical energy and the valve spool member 51 of the manual range selection valve 48 is set to the "D" range, the "3" range, or the "L" range, is communicated via a hydraulic fluid conduit 135 to a control port 134 of the aforementioned third/fourth switching valve 128.

Now, the third/fourth or direct/overdrive switching valve 128 will be described. This valve 128 comprises a housing member in which a first bore designated by the reference numeral 129 and a second bore designated by the reference numeral 131 are formed, said first bore 129 and said second bore 131 being coaxial and communicating, the latter being slightly larger in radius than the former, and a spool shaped valve element 130 slides reciprocatingly within the first bore 129, in the upward and downward directions as seen in the figure, while a piston element 132 slides reciprocatingly within the second bore 131, also in the upward and downward directions as seen in Fig. 2. The valve element 130 is shown as shifted to its downwards position as seen in Fig. 2 within the first bore 129 in the part of Fig. 2 to the left of the central axis of the first bore 129, and is there designated by the reference numeral 128A; and, similarly, the valve element 130 is shown as shifted to its upwards position as seen in Fig. 2 within the first bore 129 in the part of Fig. 2 to the right of the central axis of the first bore 129, and is there designated by the reference numeral 128B. The piston element 132 is only shown in Fig. 2 in its upwards position in the sense of the figure within the second bore 131. A compression coil spring 133 is located within the first bore 129, as interposed between the valve element 130 and the piston element 132, and biases the valve element 130 downwards as seen in Fig. 2, towards its downwardly shifted position 128A, while said compression coil spring 133 biases the piston element 132 upwards as seen in Fig. 2 within the second valve bore 131.

The control port 134 of the third/fourth switching valve 128 opens to a chamber which is formed at the bottom as seen in Fig. 2 of the first valve bore 129 of the third/fourth switching valve 128, and accordingly hydraulic fluid pressure, when said hydraulic fluid pressure is supplied to this control port 134, biases the valve element 130 and the piston element 132 of the third/fourth switching valve 128 in the upwards direction as seen in Fig. 2 within the first and second valve bores 129 and 131. The control port 141 opens to a chamber which is formed at the top as seen in Fig. 2 of the second valve bore 131 of the third/fourth switching valve 128, and accordingly hydraulic fluid pressure, when said hydraulic fluid pressure is supplied to said control port 141, biases the valve element 130 and the piston element 132 in the downwards direction as seen in Fig. 2 within the first and second valve bores 129 and 131. Further, the control ports 138 and 139 open to positions located between the first valve bore 129 and the second valve bore 131, and accordingly hydraulic fluid pressure, when said hydraulic fluid pressure is supplied to either of said control ports 138 and 139, biases the valve element 130 in the downwards direction as seen in Fig. 2 within the first valve bore 129. The reason for the provision of the two separate control ports 138 and 139, and the step on the upper portion of the valve element 130, is so as to ensure that both the under side pressure receiving surface of the piston element 132 and the upper side pressure receiving surface of the valve element 130 are more positively exposed to the hydraulic fluid pressure supplied via the hydraulic fluid conduit 140, which thus can exert force downwards in the figure on the valve element 130, while the piston element 132 is positively guided along the second valve bore 131. The input port 136, on the other hand, opens between lands formed in the side of the first valve bore 129, and accordingly hydraulic fluid pressure, when it is supplied to this input port 136, does not bias the valve element 130 axially within the first valve bore 129; but, as the valve element 130 moves within the first valve bore 129 between its downwardly shifted position 128A and its upwardly shifted position 128B, this hydraulic fluid pressure, when supplied, is selectively supplied to output ports 143 or 144 of the third/fourth switching valve 128, as will be explained later.

In more detail, according to the biasing action of the compression coil spring 133, when the line hydraulic fluid pressure Pl is supplied to the control port 134 of the third/fourth switching valve 130, but is not supplied to any of the control ports 138, 139, or 141 thereof, then, according to the pressure that thereby is exerted on the lower end in Fig. 2 of the valve element 130, this valve element 130 is switched to its upwardly shifted position 128B, against the biasing action of the compression coil spring 133 which is overcome. On the other hand, the valve element 130 is switched to its downwardly shifted position 128A, with the aid of the biasing action of the compression coil spring 133, in the following cases:  when line hydraulic fluid pressure Pl is not supplied to any of the control ports 134, 138, 139, and 141; when line hydraulic fluid pressure Pl is supplied to all of the control ports 134, 138, 139, and 141; and when line hydraulic fluid pressure Pl is supplied to any one or more of the control ports 141, 138, and 139, but is not supplied to the control port 134.

As mentioned previously, the control port 134 receives supply of the line hydraulic fluid pressure Pl, via the hydraulic fluid conduit 70, the port 72 of the second switching valve 71, and the hydraulic fluid conduit 135, when and only when the second solenoid valve 76 is not supplied with actuating electrical energy by the electric control device 79, and also the valve spool element 51 of the manual range selection valve 48 is set to the "D" position, the "3" position, or the "L" position. Further, the control port 141 of the third/fourth switching valve 128 receives supply of the line hydraulic fluid pressure Pl, via a hydraulic fluid conduit 87 and a hydraulic fluid conduit 142, from the output port 53 of the manual range selection valve 48, when and only when the valve spool 51 of the manual range selection valve 48 is switched to the "3" position or the "L" position. Yet further, the controls ports 138 and 139 receive supply of the line hydraulic fluid pressure Pl, via a hydraulic fluid conduit 140, from the output port 93 of the first switching valve 63, and this line hydraulic fluid pressure Pl is provided only when both the valve spool element 51 of the manual range selection valve 48 is shifted to either the D position, the "3" position, or the "L" position, and in addition the valve element 83 of the first switching valve 63 is shifted to its downwards position as seen in Fig. 2 within the bore 82, i.e. when the first solenoid valve 73 is supplied with actuating electrical energy, so that no supply of line hydraulic fluid pressure Pl is present at the control port 68 of the first switching valve 63, or when the valve spool member 51 of the manual range selection valve 48 is switched to the "L" position. Accordingly, the valve element 130 of the third/fourth switching valve 128 is switched to its upwardly shifted position 128B, when and only when: the valve spool member 51 of the manual range selection valve 48 is set to the "D" position, the second solenoid valve 76 is not supplied with actuating electrical energy, and the first solenoid valve 73 is not supplied with actuating electrical energy; and at all other times the valve element 130 is switched to its downwardly shifted position 128A.

The hydraulic fluid pressure which is switched by the third/fourth switching valve 128 is supplied directly from the line hydraulic fluid pressure regulation valve 42, via the hydraulic fluid conduit 47 and a hydraulic fluid conduit 137, to be supplied to its input port 136. This hydraulic fluid pressure is switched as follows. When the valve element 130 of the third/fourth switching valve 128 is in its downwardly shifted position 128A, then the input port 136 is communicated to the output port 144, while the output port 143 is connected to a drain port. On the other hand, when the valve element 130 of the third/fourth switching valve 128 is in its upwardly shifted position 128B, then the input port 136 is communicated to the output port 143, while the output port 144 is connected to a drain port.

The output ports of the third/fourth switching valve 128 are connected as follows. The output port 143 is connected to a hydraulic fluid conduit 145 which leads to the multi plate brake 19 of the overdrive device 2, and at an intermediate point of this hydraulic fluid conduit 145 there are provided a throttle element 146 and a one way valve 147 in parallel, in order to adjust the timing of the engagement and the disengagement of the multi plate brake 19, in a per se well known way. The output port 144 of the third/fourth switching valve 128 is communicated, via a hydraulic fluid conduit 148, to the multi plate clutch 12 of the overdrive device 2, and at an intermediate point of this hydraulic fluid conduit 148 there are provided a throttle element 149 and a one way valve 150 in parallel, in order to adjust the timing of the engagement and the disengagement of the multi plate clutch 12, again in a per se well known way.

In order to prevent any sudden or abrupt change in the line hydraulic fluid pressure due to the switching over of the valve 128, a hydraulic fluid accumulator 152 is connected to the conduit 47 by way of a conduit 151.

Now, the operation of the shown preferred embodiment of the transmission control system according to the present invention, and of the transmission system shown in Fig. 1 which is controlled thereby, will be explained, making reference to the appended Table. In this Table, the energization conditions of the first and second solenoid valves 73 and 76, and the engagement and disengagement states of the various fluid pressure activated multi plate clutches and brakes incorporated in the transmission system shown in Fig. 1, are shown, for each of the possible range selection positions of the valve spool element 51 of the manual range selection valve 48, and for each of the speed stages of the transmission system shown in Fig 1 that can be engaged, in that selected speed range. In this Table, the symbols "O" and "X", referring to the solenoid valves 73 and 76, denote respectively supply of electrical energy thereto, and non supply of electrical energy thereto; and the symbol "O", referring to the hydraulic fluid pressure activated friction engagement devices, i.e. the multi plate clutches and brakes, denotes supply of actuating hydraulic fluid pressure thereto. Further, the rows of this Table designated by "(3)" and "(1)" refer to failure conditions of the electrical control system, wherein neither of the first and second electrically actuated solenoid valves 73 and 76 is supplied with actuating electrical energy, as will be more fully explained hereinafter.

First, when the valve spool element 51 of the manual range selection valve 48 is set to either the "P" position or the "N" position, then as explained above no hydraulic fluid pressure appears at any of the output ports thereof. It should be understood, although it is not so shown in Fig. 2, that the electrical control device 79 receives an electrical signal from the manual range selection valve 48, or from some member coupled to the movement of the valve spool member 51 thereof, indicating which position said valve spool member 51 thereof is switched to, so that, in other words, the electrical control device 79 knows what range is selected by the driver of the vehicle on the manual range selection control thereof. When the manual range selection valve 48 is switched to either the "P" range or the "N" range, therefore, the electrical control device 79 senses this condition, and according thereto positively and definitely does not energize either the first solenoid valve 73 or the second solenoid valve 76, as shown in the Table in the rows thereof designated by "P" and "N". Further, in this state of the shown preferred embodiment of the transmission control system according to the present invention, since no hydraulic fluid pressure is present at the output port 52 of the manual range selection valve 48, thereby no source hydraulic fluid pressure is available to be switched by the first solenoid valve 73 or the second solenoid valve 76, and therefore, irrespective of any electrical signals produced by the electrical control device 79, no hydraulic fluid pressure is supplied to the control port 68 of the first switching valve 63, or to the control port 72 of the second switching valve 71, or to the control port 134 of the third/fourth switching valve 128. According to this, the valve element 83 of the first switching valve 63 is, in this condition, in its downwardly shifted position 63A, the valve element 111 of the second switching valve 71 is in its downwardly shifted position 71A, and the valve element 130 of the third/fourth switching valve 128 is in its downwardly shifted position 128A. In these conditions, the only hydraulic fluid pressure present in the system shown in Fig. 2 is the line hydraulic fluid pressure P1 present in the hydraulic fluid conduit 47, and the only effect that this line hydraulic fluid pressure P1 has, (since it is cut off at the input port 49 of the manual range selection valve 48), is that said line hydraulic fluid pressure P1 is conducted through the hydraulic fluid conduit 137 to be supplied to the input port 136 of the third/fourth switching valve 128, wherefrom, since the valve element 130 of this valve 128 is switched to its downwardly shifted position 128A, said line hydraulic fluid pressure P1 is supplied to the output port 144, whence it is supplied, via the hydraulic fluid conduit 148 and the throttle element 149, to the multi plate clutch 12. Accordingly, only the multi plate clutch 12 is engaged, out of all the hydraulic fluid pressure activated friction engaging devices, as shown in the rows of the Table designated by "P" and "N". It will be apparent to one skilled in the art, based upon inspection of the schematic transmission construction diagram shown in Fig. 1, that this engagement combination of the hydraulic fluid pressure activated friction engaging mechanisms causes the transmission system shown therein to be put into the neutral stage. It will also be apparent that this function of putting the transmission system shown in Fig. 1 into the neutral stage does not depend upon any action of the electrical control device 79, and accordingly, even if the electrical control device 79 has failed, or is erroneously not supplied with activating electrical energy, nevertheless it will be possible to engage the neutral stage of the transmission system, merely by shifting the valve spool element 51 of the manual range selection valve 48 to the "N" position. Thus a fail safe operation of the transmission system in the "P" and the "N" ranges is available. By the way, when the valve spool element 51 of the manual range selection valve 48 is shifted to the "P" position, further a pawl device not shown in the figures, activated in a manner which is not shown and not relevant to the present invention and which therefore will not be further discussed here, locks the power output shaft 39 of the transmission system, so as to prevent the vehicle from moving.

Next, if the valve spool element 51 of the manual range selection valve 48 is switched to the "R" position, then again, based upon an electrical signal indicative of this condition, the electrical control device 79 does not produce any energization signals, via the control lines 80 and 81, for the first and second solenoid valves 73 and 76, which in any case are not supplied with any supply of line hydraulic fluid pressure Pl from the output port 52 of the manual range selection valve 48, and accordingly, no hydraulic fluid pressure is present at the control ports 68, 78, and 134 of respectively the first switching valve 63, the second switching valve 71, and the third/fourth switching valve 128. Therefore, again, the valve element 83 of the first switching valve 63 is definitely in its downwardly shifted position 63A, the valve element 111 of the second switching valve 71 is in its downwardly shifted position 71A, and the valve element 130 of the third/fourth switching valve 128 is in its downwardly shifted position 128A. However, at this time, a supply of line hydraulic fluid pressure Pl is present at the output port 55 of the manual range selection valve 48, and this supply of line hydraulic fluid pressure Pl is conducted to the input port 90 of the first switching valve 63, whence both it is conducted to the output port 94 of this first switching valve 63, and also it is conducted, via the hydraulic fluid conduit 101, to the input port 103 of the second switching valve 71. The hydraulic fluid pressure thus supplied to the output port 94 of the first switching valve 63 is conducted, via the hydraulic fluid conduit 96 and the hydraulic fluid conduit 153, to the control port 113 of the second switching valve 71, where it serves to aid the biasing of the valve element 111 thereof to its downwardly shifted position 71A. This hydraulic fluid pressure is also conducted, via the hydraulic fluid conduit 96, to be supplied, via the throttle element 97, as previously explained, to the outer clutch 25a of the multi plate clutch 25. Further, this supply of hydraulic fluid pressure is also conducted, via the hydraulic fluid conduit 154, to the sequence control valve 105. The supply of line hydraulic fluid pressure Pl made from the input port 90 of the first switching valve 63 to the hydraulic fluid conduit 101 is conducted to the input port 103 of the second switching valve 71, and is also conducted, via the hydraulic fluid conduit 104 and the sequence control valve 105, to the inner clutch 25b of the multi plate clutch 25. Accordingly both the outer and inner clutches 25a and 25b of the multi plate clutch 25 are put into engagement. From the input port 103 of the second switching valve 71, this supply of hydraulic fluid pressure is conducted to the output port 118 thereof, whence it is supplied via the hydraulic fluid pressure 126 and the throttle element 127 to the multi plate brake 27, so as to engage said multi plate brake 27. Further, in the same way as explained above, the supply of line hydraulic fluid pressure Pl which is provided from the hydraulic fluid conduit 47 through the hydraulic fluid conduit 137 to the input port 136 of the third/fourth switching valve 128 is conducted to the output port 144 thereof, whence it is supplied via the hydraulic fluid conduit 148 and the throttle element 149 to the multi plate clutch 12. These energization and fluid pressure conditions are shown in the row of the Table designated by "R". It will be apparent to one skilled in the art, based upon inspection of the schematic transmission construction diagram shown in Fig. 1, that this engagement combination of the hydraulic fluid pressure activated friction engaging mechanisms causes the transmission system shown therein to be put into the reverse driving stage. It will also be apparent that this function of putting the transmission system shown in Fig. 1 into the reverse driving stage does not depend upon any action of the electrical control device 79, and accordingly, even if the electrical control device 79 has failed, or is erroneously not supplied with activating electrical energy, nevertheless it will be possible to engage the reverse driving stage of the transmission system, merely by shifting the valve spool element 51 of the manual range selection valve 48 to the "R" position. Thus a fail safe operation of the transmission system in the "R" range is available.

Next, the case will be considered in which the valve spool element 51 of the manual range selection valve 48 is set to the "L" position.

In this case, as explained above, line hydraulic fluid pressure Pl appears at the output ports 52, 53, and 54 of the manual range selection valve 48. The line hydraulic fluid pressure Pl which appears at the port 52 of the manual range selection valve 48 is conducted, via the hydraulic fluid conduit 57, to be supplied, via the hydraulic fluid conduit 59 and the throttle element 60, to the multi plate clutch 24, thus engaging this multi plate clutch 24. Further, this line hydraulic fluid pressure Pl is supplied, via the hydraulic fluid conduit 62, to the input port 64 of the first switching valve 63, and is also supplied, via the hydraulic fluid conduit 65, to the first solenoid valve 73, and also, via the hydraulic fluid conduit 70, to the second solenoid valve 76. The hydraulic fluid pressure which is supplied to the output port 53 of the manual range selection valve 48 is conducted, via the hydraulic fluid conduit 87, to be supplied to the hydraulic fluid conduits 88 and 142. The hydraulic fluid conduit 88 conducts this line hydraulic fluid pressure Pl to the input port 86 of the first switching valve 63, and the hydraulic fluid conduit 142 conducts this line hydraulic fluid pressure Pl to the control port 141 of the third/fourth switching valve 128. Further, the line hydraulic fluid pressure Pl present at the output port 54 of the manual range selection valve 48 is conducted, via the hydraulic fluid conduit 89, to the control port 85 of the first switching valve 63.

Since the setting of the valve spool element 51 of the manual range selection valve 48 is intended by the operator of the vehicle to select the "L" range, wherein only either the first speed stage or the second speed stage of the automatic transmission system ought to be engaged depending upon various vehicle operational conditions, therefore the electric control device 79, based upon the fact that it detects this switching position of the manual range selection valve 48, when said electrical control device 79 is operating correctly, according to said various vehicle operational conditions, either (a) energizes both the first solenoid valve 73 and the second solenoid valve 76, in order to provide the second speed stage from the transmission system; or (b) energizes the first solenoid valve 73, but does not energize the second solenoid valve 76, in order to provide the first speed stage from the transmission system. In either case, because of the supply of line hydraulic fluid pressure Pl to the control port 85 of the first switching valve 63, the valve element 83 of this first switching valve 63 is in its downwardly shifted position 63A, and therefore the hydraulic fluid pressure supplied to the control port 85 is transmitted to the output port 95 and via the hydraulic fluid conduit 108, the low coast valve 106, and the throttle element 107 to the input port 109 of the second switching valve 71. Further, in either case, because of the supply of hydraulic fluid pressure to the control port 141 of the third/fourth switching valve 128, the valve element 130 of this third/fourth switching valve 128 is in its downwardly shifted position 128A. Further, in case (a), since actuating electrical energy is supplied to the second solenoid valve 76, thereby no hydraulic fluid pressure is present at the control port 72 of the second switching valve 71, and accordingly the valve element 111 of the second switching valve 71 is in its downwardly shifted position 71A. On the other hand, in case (b), since actuating electrical energy is not supplied by the electrical control device 79 to the second solenoid valve 76, thereby hydraulic fluid pressure is transmitted via the hydraulic fluid conduit 70 to the control port 72 of the second switching valve 71, and, since at this time no hydraulic fluid pressure is being supplied to the control port 113 of this second switching valve 71, accordingly the valve element 111 of this second switching valve 71 is in its upwardly shifted position 71B. Further, if as a result of failure of the electrical control device 79, or of the electrical energy supply thereto, erroneously the electrical control device 79 is not supplying actuating electrical energy to either of the first and second solenoid valves 73 and 76, then in this case (c), shown by the row of the Table designated by (1), then, because of the overriding supply of hydraulic fluid pressure to the control port 85 of the first switching valve 63, thereby the valve element 83 of this first switching valve 63 will still be in its downwardly shifted position 63A, and the valve element 111 of the second switching valve 71 will be, as in case (b) described above, in its upwardly shifted position 71B.

In the first case (a), wherein all of the respective valve elements 83, 111, and 130 of the switching valves 63, 71, and 128 are in their downwardly shifted positions as shown on the left sides of the central axes of their switching valves in Fig. 2, then no hydraulic fluid pressure is suplied to the input port 90 of the first switching valve 63, nor is hydraulic fluid pressure supplied to the output port 94 of this valve 63, and accordingly neither the outer clutch 25a nor the inner clutch 25b of the multi plate clutch 25 is engaged. On the other hand, the hydraulic fluid pressure which is supplied to the input port 64 of the first switching valve 63 is conducted, via the hydraulic fluid conduit 115, to the input port 114 of the second switching valve 71, and thence is conducted to the output port 117 thereof, whence via the hydraulic fluid conduit 123 and the throttle element 124 said hydraulic fluid pressure is supplied to the multi plate brake 41, so as to engage this multi plate brake 41. Further, the hydraulic fluid pressure which is supplied to the input port 86 of the first switching valve 63 is conducted to the output port 92 thereof, whence said hydraulic fluid pressure is conducted, via the hydraulic fluid conduit 99, to the input port 100 of the second switching valve 71, whence it is conducted to the output port 116 thereof, whence via the hydraulic fluid conduit 122 and the second low coast valve 119 and the throttle element 120 said hydraulic fluid pressure is conducted to the multi plate brake 26, so as to set this multi plate brake 26 into engagement. On the other hand, no hydraulic fluid pressure is supplied from the hydraulic fluid conduit 101 to the hydraulic fluid conduit 102 to be supplied to the input port 103 of the second switching valve 71, and accordingly no output hydraulic fluid pressure is present at the output port 118 of this valve, and therefore no hydraulic fluid pressure is conducted, via the hydraulic fluid conduit 126 and the throttle element 127, to the multi plate brake 27, which accordingly is left disengaged. Finally, because as mentioned above the line hydraulic fluid pressure Pl is being supplied to the control port 141 of the third/fourth switching valve 128, thereby the valve element 130 of this third/fourth switching valve 128 is in its downwardly shifted position 128A, and the line pressure which is being supplied to the input port 136 thereof is not supplied to the output port 143 thereof, which is connected to a drain port, but is supplied to the output port 144 thereof. According to this, the multi plate brake 19 is not supplied with actuating hydraulic fluid pressure, and is disengaged, but on the contrary the multi plate clutch 12 is supplied with hydraulic fluid pressure, via the hydraulic fluid conduit 148 and the throttle element 149, and is engaged. These energization and fluid pressure conditions are shown in the row of the Table designated by "2" under the heading "L". It will be apparent to one skilled in the art, based

- 44 -                                    0040820

upon inspection of the schematic transmission construction diagram shown in Fig. 1, that this engagement combination of the hydraulic fluid pressure activated friction engaging mechanisms causes the transmission system shown therein to be put into the second speed stage, with engine braking being available.

In the second case (b), wherein the valve elements 83 and 130 respectively of the first switching valve 63 and the third/fourth switching valve 128 are in their downwardly shifted positions as shown to the left of the central axes of these valves in Fig. 2, but the valve element 111 of the second switching valve 71 is in its upwardly shifted position 71B, then the hydraulic fluid pressure supplies to the outer and inner clutches 25a and 25b of the multi plate clutch 25 are performed in the same way as in case (a), and, similarly, the hydraulic fluid pressure supplies to the multi plate clutch 12 and to the multi plate brake 19 are performed in the same way as in case (a) above. On the other hand, in this case, the hydraulic fluid pressure which is supplied to the input port 114 of the second switching valve 17 is cut off, and is not supplied to the output port 117 of this second switching valve 71, which instead is connected to a drain port, and accordingly no hydraulic fluid pressure is supplied via the hydraulic fluid conduit 123 and the throttle element 124 to the multi plate brake 41 so as to engage it, and accordingly this multi plate brake 41 is disengaged in this case. Further, the input port 100 of the second switching valve 71 is not communicated, in this case, to the output port 116 thereof, but instead this output port 116 of the second switching valve 71 is connected to a drain port, and accordingly no hydraulic fluid pressure is supplied via the hydraulic fluid conduit 122, and the second low coast valve 119 and the throttle element 120, to the multi plate brake 26 so as to engage it, and accordingly this multi plate brake 26 is put into disengagement. On the other hand, the hydraulic fluid pressure which is being supplied, as previously explained, to the input port 109 of the second switching valve 71 is now, in this state, conducted to the output port 118 of this second switching valve 71, and is conducted, via the hydraulic fluid conduit 126 and the throttle element 127, to the multi plate brake 27, thus setting this multi plate brake 27 into engagement. These energization and fluid pressure conditions are shown in the row of the Table designated by "1" under the heading "L". It will be clear, to one skilled in the art, based upon inspection of the schematic transmission construction diagram shown in Fig. 1, that this engagement combination of the hydraulic fluid pressure activated friction engaging mechanisms causes the transmission system shown therein to be put into the first speed stage, with engine braking being available.

In case (c), in which no activating electrical energy is supplied by the electrical control device 79 to either of the first and second solenoid valves 73 and 76, although the valve spool element 51 of the manual range selection valve 48 is set to the "L" range, due to some malfunction, then, because as explained above the positions of the valve elements of the first switching valve 63, the second switching valve 71, and the third/fourth switching valve 128 will still be as in case (b) described above, thereby still the engagement conditions of the various clutches and brakes of the automatic transmission system shown in Fig. 1 will be as in case (b) described above, and accordingly, again, the first speed stage of the transmission system will be engaged, with engine braking available. These energization and fluid pressure conditions are shown in the row of the Table designated by "(1)" under the heading "L". Thus, a fail safe operation of the transmission system in the first speed stage is available, by shifting the valve spool element 51 of the manual range selection valve 48 to the "L" position, which in the case of electrical failure positively engages the first speed stage.

Next, the case will be considered in which the valve spool element 51 of the manual range selection valve 48 is set to the "3" position.

In this case, as explained above, line hydraulic fluid pressure Pl appears at the output ports 52 and 53 of the manual range selection valve 48, but not at the output port 54 thereof. The line hydraulic fluid pressure Pl which appears at the port 52 of the manual range selection valve 48 is conducted, via the hydraulic fluid conduits 57 and 58, to be supplied, via the hydraulic fluid conduit 59 and the throttle element 60, to the multi plate clutch 24, thus engaging this multi plate clutch 24. Further, this line hydraulic fluid pressure Pl is supplied, via the hydraulic fluid conduit 62, to the input port 64 of the first switching valve 63, and is also supplied, via the hydraulic fluid conduit 65, to the first solenoid valve 73, and also, via the hydraulic fluid conduit 70, to the second solenoid valve 76. The hydraulic fluid pressure which is supplied to the output port 53 of the manual range selection valve 48 is conducted, via the hydraulic fluid conduit 87, to be supplied to the hydraulic fluid conduits 88 and 142. The hydraulic fluid conduit 88 conducts this line hydraulic fluid pressure Pl to the input port 86 of the first switching valve 63, and the hydraulic fluid conduit 142 conducts this line hydraulic fluid pressure Pl to the control port 141 of the third/fourth switching valve 128.

Since the setting of the valve spool element 51 of the manual range selection valve 48 is intended by the operator of the vehicle to select the "3" range, wherein only either the first speed stage, the second speed stage, or the third speed stage of the automatic transmission system ought to be engaged depending upon various vehicle operational conditions, therefore the electric control device 79, based upon the fact that it detects this switching position of the valve spool member 51 of the manual range selection valve 48, when said electrical control device 79 is operating correctly, according to said various vehicle operational conditions, either (a) does not energize the first solenoid valve 73, but energizes the second solenoid valve 76, in order to provide the third speed stage from the transmission system; or (b) energizes both the first solenoid valve 73 and also the second solenoid valve 76, in order to provide the second speed stage from the transmission system; or (c) energizes the first solenoid valve 73, but does not energize the second solenoid valve 76, in order to provide the first speed stage from the transmission system. Further, as a result of failure of the electrical control device 79, or of the electrical energy supply thereto, it is possible for a fourth case (d) to arise, in which erroneously the electrical control device 79 does not supply actuating electrical energy to either of the first and the second solenoid valves 73 and 76.

In the first case (a), when said electrical control device 79 is not energizing the first solenoid valve 73, but is energizing the second solenoid valve 76, then thereby hydraulic fluid pressure is present at the control port 68 of the first switching valve 63, but is not present at the control port 72 of the second switching valve 71, or at the control port 134 of the third/fourth switching valve 128. Further, no hydraulic fluid pressure is present at the control port 85 of the first switching valve 63, since no hydraulic fluid pressure is available at the output port 54 of the manual range selection valve 48, and accordingly the valve element 83 of this first switching valve 63 is in its upwardly shifted position 63B. Accordingly, the input port 64 of the first switching valve 63 is communicated to the output port 94 thereof, and therefore the hydraulic fluid pressure present at the input port 64 at this time is communicated through the output port 94 to the hydraulic fluid conduit 96, and via the throttle element 97 to the outer clutch 25a of the multi plate clutch 25, so as to put this outer clutch 25a into engagement. Further, this hydraulic fluid pressure present in the hydraulic fluid conduit 96 is communicated, via the hydraulic fluid conduit 153, to the control port 113 of the second switching valve 71, so that the valve member 111 of this second switching valve 71 is in its downwardly shifted position 71A. Since no hydraulic fluid pressure is present at the input port 90 of the first switching valve 63, therefore no hydraulic fluid pressure is present within the hydraulic fluid conduit 101, and accordingly no hydraulic fluid pressure is supplied to the hydraulic fluid conduit 104. Accordingly, the inner clutch 25b of the multi plate clutch 25 is not engaged. Further, since the valve member 83 of the first switching valve 63 is in its upwardly shifted position 63B, the output port 92 thereof is communicated to a drain port, and therefore the output port 116 of the second switching valve 71, which is communicated to the input port 100 thereof, since the valve member 111 of said second switching valve 71 is in its downwardly shifted position 71A, is drained via the hydraulic fluid conduit 99, and accordingly no hydraulic fluid pressure is supplied via the hydraulic fluid conduit 122 and the second low coast valve 119 and the throttle element 120 to the multi plate brake 26, and accordingly this multi plate brake 26 is disengaged. Further, the line hydraulic fluid pressure Pl present at the port 64 of the first switching valve 63 is conducted via the hydraulic fluid conduit 115 to the input port 114 of the second switching valve 71, and, because the valve element 111 of this second switching valve is in its downwardly shifted position 71A, this hydraulic fluid pressure is supplied to the port 117, whence via the hydraulic fluid conduit 123 and the throttle element 124 it is conducted to the multi plate brake 41, thus setting this multi plate brake 41 into engagement. No hydraulic fluid pressure is being supplied to the input port 90 of the first switching valve 63, and accordingly no hydraulic fluid pressure is present within the hydraulic fluid conduit 101 or at the input port 103 of the second switching valve 71, which is communicated to the output port 118 thereof, and accordingly no hydraulic fluid pressure is present within the hydraulic fluid conduit 126 to be supplied via the throttle element 127 to the multi plate brake 27, which accordingly is disengaged. Finally, because as mentioned above the line hydraulic fluid pressure Pl is being supplied to the control port 141 of the third/fourth switching valve 128, thereby the valve element 130 of this third/fourth switching valve 128 is in its downwardly shifted position 128A, and the line pressure which is being supplied to the input port 136 thereof is not supplied to the output port 143 thereof, which is connected to a drain port, but is supplied to the output port 144 thereof. According to this, the multi plate brake 19 is not supplied with actuating hydraulic fluid pressure, and is disengaged, but on the contrary the multi plate clutch 12 is supplied with hydraulic fluid pressure, via the hydraulic fluid conduit 148 and the throttle element 149, and is engaged. These energization and fluid pressure conditions are shown in the row of the Table designated by "3" under the heading "3". It will be clear, to one skilled in the art, based upon inspection of the schematic transmission construction diagram shown in Fig. 1, that this engagement combination of the hydraulic fluid pressure activated friction engaging mechanisms causes the transmission system shown therein to be put into the third speed stage.

In the second case (b), when said electrical control device 79 is energizing the first solenoid valve 73, and is also energizing the second solenoid valve 76, then thereby hydraulic fluid pressure is not present either at the control port 68 of the first switching valve 63, or at the control port 72 of the second switching valve 71, and is not present at the control port 134 of the third/fourth switching valve 128 either. Thus, although no hydraulic fluid pressure is present at the control port 85 of the first switching valve 63, nevertheless, under the biasing action of the compression coil spring 84, the valve element 83 of this first switching valve 63 is in its downwardly shifted position 63A. Accordingly, this case is the same as the already described second speed stage in "L" range, in which the valve element 83 of the first switching valve 63 was in its downwardly shifted position 63A by the biasing action of the compression coil spring 84 plus the hydraulic fluid pressure supplied to the port 85. That is, the energization and fluid pressure conditions shown in the row of the Table designated by "2" under the heading "3" are the same as those shown in the row of the Table designated by "2" under the heading "L".

Again, this engagement combination of the hydraulic fluid pressure activated friction engaging mechanisms causes the transmission system shown therein to be put into the second speed stage, with engine braking being available.

In the third case (c), when said electrical control device 79 is energizing the first solenoid valve 73, but is not energizing the second solenoid valve 76, then thereby hydraulic fluid pressure is not present at the control port 68 of the first switching valve 63, but is present at the control port 72 of the second switching valve 71, and is also present at the control port 134 of the third/fourth switching valve 128. Thus, although no hydraulic fluid pressure is present at the control port 85 of the first switching valve 63, nevertheless, under the biasing action of the compression coil spring 84, the valve element 83 of this first switching valve 63 is in its downwardly shifted position 63A. Accordingly, this case is the same as the already described first speed stage in the "L" range, in which the valve element 83 of the first switching valve 63 was in its downwardly shifted position 63A by the biasing action of the compression coil spring 84 plus the line hydraulic fluid pressure Pl supplied to the port 85, except, however, that in this third case (c) the brake 27 which is engaged by either the line hydraulic fluid pressure Pl which appears at the "R" port 55 or the line hydraulic fluid pressure Pl which appears at the "L" port 54 of the manual range selection valve 48 is not engaged, and therefore engine braking is not available. These energization and fluid pressure conditions are shown in the row of the Table designated by "1" under the heading "3".

Finally, in the fourth or malfunction case (d), when said electrical control device 79 is energizing neither the first solenoid valve 73 nor the second solenoid valve 76, then thereby hydraulic fluid pressure is present at the control port 68 of the first switching valve 63, and is also present at the control port 72 of the second switching valve 71, and at the control port 134 of the third/fourth switching valve 128. Further, no hydraulic fluid pressure is present at the control port 85 of the first switching valve 63, and accordingly the valve element 83 of this first switching valve 63 is biased, against the compression action of the compression coil spring 84 which is overcome, to its upwardly shifted position 63B. Accordingly, the input port 64 of the first switching valve 63 is communicated to the output port 94 thereof, and therefore the hydraulic fluid pressure present at the input port 64 at this time is communicated through the output port 94 to the hydraulic fluid conduit 96, and via the throttle element 97 to the outer clutch 25a of the multi plate clutch 25, so as to put this outer clutch 25a into engagement. Further, this hydraulic fluid pressure present in the hydraulic fluid conduit 96 is communicated, via the hydraulic fluid conduit 153, to the control port 113 of the second switching valve 71, so that the valve member 111 of this second switching valve 71 is in its downwardly shifted position 71A. Since no hydraulic fluid pressure is present at the input port 90 of the first switching valve 63, therefore no hydraulic fluid pressure is present within the hydraulic fluid conduit 101, and accordingly no hydraulic fluid pressure is supplied to the hydraulic fluid conduit 104 or at the input port 103 of the second switching valve 71, which is communicated to the output port 118 thereof. Accordingly, the inner clutch 25b of the multi plate clutch 25 is not engaged, and the multi plate brake 27, which is connected to the port 118 via the conduit 126, is not supplied with any hydraulic fluid pressure, and is disengaged. Further, since the valve member 83 of the first switching valve 63 is in its upwardly shifted position 63B, the output port 92 thereof is communicated to a drain port, and therefore the output port 116 of the second switching valve 71, which is communicated to the input port 100 thereof, since the valve member 111 of said second switching valve 71 is in its downwardly shifted position 71A, is drained via the hydraulic fluid conduit 99, and accordingly no hydraulic fluid pressure is supplied via the hydraulic fluid conduit 122 and the second low coast valve 119 and the throttle element 120 to the multi plate brake 26, and accordingly this multi plate brake 26 is disengaged. Further, the line hydraulic fluid pressure P1 present at the port 64 of the first switching valve 63 is conducted via the hydraulic fluid conduit 115 to the input port 114 of the second switching valve 71, and, because the valve element 111 of this second switching valve is in its downwardly shifted position 71A, this hydraulic fluid pressure is supplied to the port 117, whence via the hydraulic fluid conduit 123 and the throttle element 124 it is conducted to the multi plate brake 41, thus setting this multi plate brake 41 into engagement. Finally, because as mentioned above the line hydraulic fluid pressure P1 is being supplied to the control port 141 of the third/fourth switching valve 128, thereby the valve element 130 of this third/fourth switching valve 128 is in its downwardly shifted position 128A, and the line pressure which is being supplied to the input port 136 thereof is not supplied to the output port 143 thereof, which is connected to a drain port, but is supplied to the output port 144 thereof. According to this, the multi plate brake 19 is not supplied with actuating hydraulic fluid pressure, and is disengaged, but on the contrary the multi plate clutch 12 is supplied with hydraulic fluid pressure, via the hydraulic fluid conduit 148 and the throttle element 149, and is engaged. These energization and fluid pressure conditions are shown in the row of the Table designated by "(3)" under the heading "3". This engagement combination of the hydraulic fluid pressure activated friction engaging mechanisms causes the transmission system shown therein to be put into the third speed stage. Thus, a fail safe operation of the transmission system in the third speed stage is available, by shifting the valve spool element 51 of the manual range selection valve 48 to the "3" position, which in the case of electrical failure positively engages the third speed stage.

Next, the case will be considered in which the valve spool element 51 of the manual range selection valve 48 is set to the "D" position.

In this case, as explained above, line hydraulic fluid pressure Pl appears at the output port 52 of the manual range selection valve 48, but not at either of the output ports 53 or 54 thereof.

Since the setting of the valve spool element 51 of the manual range selection valve 48 is intended by the operator of the vehicle to select the "D" range, wherein any one of the first speed stage, the second speed stage, the third speed stage, and the fourth speed stage or the overdrive stage of the automatic transmission system ought to be engaged depending upon various vehicle operational conditions, therefore the electric control device 79, based upon the fact that it detects this switching position of the valve spool member 51 of the manual range selection valve 48, when said electrical control device is operating correctly, according to said various vehicle operational conditions, either (a) does not energize either the first solenoid valve 73 or the second solenoid valve 76, in order to provide the fourth speed stage or the overdrive speed stage from the transmission system; or (b) does not energize the first solenoid valve 73, but energizes the second solenoid valve 76, in order to provide the third speed stage from the transmission system; or (c) energizes both the first solenoid valve 73 and also the second solenoid valve 76, in order to provide the second speed stage from the transmission system; or (d) energizes the first solenoid valve 73, but does not energize the second solenoid valve 76, in order to provide the first speed stage from the transmission system. Further, as a result of failure of the electrical control device 79, or of the electrical energy supply thereto, it is possible for a fifth case (e) to arise, in which erroneously the electrical control device 79 does not supply actuating electrical energy to either of the first and the second solenoid valves 73 and 76. However, it will be quite obvious that the operation in this fifth case (e) is exactly the same as in the first case (a). Thus, a fail safe operation of the transmission system in the fourth speed stage, or the overdrive speed stage, is available, by shifting the valve spool element 51 of the manual range selection valve 48 to the "D" position, which in the case of electrical failure positively engages the fourth or overdrive speed stage.

In the first case (a), when said electrical control device 79 is energizing neither the first solenoid valve 73 nor the second solenoid valve 76, then thereby hydraulic fluid pressure is present at the control port 68 of the first switching valve 63, and is also present at the control port 72 of the second switching valve 71, and at the control port 134 of the third/fourth switching valve 128. Further, no hydraulic fluid pressure is present at the control port 85 of the first switching valve 63, since no hydraulic fluid pressure is available at the output port 54 of the manual range selection valve 48, and accordingly the valve element 83 of this first switching valve 63 is in its upwardly shifted position 63B. Accordingly, the input port 64 of the first switching valve 63 is communicated to the output port 94 thereof, and therefore the hydraulic fluid pressure present at the input port 64 at this time is communicated through the output port 94 to the hydraulic fluid conduit 96, and via the throttle element 97 to the outer clutch 25a of the multi plate clutch 25, so as to put this outer clutch 25a into engagement. Further, this hydraulic fluid pressure present in the hydraulic fluid conduit 96 is communicated, via the hydraulic fluid conduit 153, to the control port 113 of the second switching valve 71, so that the valve member 111 of this second switching valve 71 is in its downwardly shifted position 71A. Since no hydraulic fluid pressure is present at the input port 90 of the first switching valve 63, therefore no hydraulic fluid pressure is present within the hydraulic fluid conduit 101, and accordingly no hydraulic fluid pressure is supplied to the hydraulic fluid conduit 104. Accordingly, the inner clutch 25b of the multi plate clutch 25 is not engaged. Further, since the valve member 83 of the first switching valve 63 is in its upwardly shifted position 63B, the output port 92 thereof is communicated to a drain port, and therefore the output port 116 of the second switching valve 71, which is communicated to the input port 100 thereof, since the valve member 111 of said second switching valve 71 is in its downwardly shifted position 71A, is drained via the hydraulic fluid conduit 99, and accordingly no hydraulic fluid pressure is supplied via the hydraulic fluid conduit 122 and the second low coast valve 119 and the throttle element 120 to the multi plate brake 26, and accordingly this multi plate brake 26 is disengaged. Further, the line hydraulic fluid pressure Pl present at the port 64 of the first switching valve 63 is conducted via the hydraulic fluid conduit 115 to the input port 114 of the second switching valve 71, and, because the valve element 111 of this second switching valve is in its downwardly shifted position 71A, this hydraulic fluid pressure is supplied to the port 117, whence via the hydraulic fluid conduit 123 and the throttle element 124 it is conducted to the multi plate brake 41, thus setting this multi plate brake 41 into engagement. No hydraulic fluid pressure is being supplied to the input port 90 of the first switching valve 63, and accordingly no hydraulic fluid pressure is present within the hydraulic fluid conduit 101 or at the input port 103 of the second switching valve 71, which is communicated to the output port 118 thereof, and accordingly no hydraulic fluid pressure is present within the hydraulic fluid conduit 126 to be supplied via the throttle element 127 to the multi plate brake 27, which accordingly is disengaged. Finally, because no hydraulic fluid pressure is being supplied from the output port 53 of the manual range selection valve 48 to the control port 141 of the third/fourth switching valve 128, and because no hydraulic fluid pressure is being supplied to the control ports 138 and 139 thereof either, since the output port 93 of the first switching valve 63 is connected to a drain port, because the valve member 83 of said first switching valve 63 is in its upwardly shifted position 63B, thereby the valve element 130 of this third/fourth switching valve 128 is allowed to be biased by the line hydraulic fluid pressure Pl supplied to the control port 134 to its upwardly shifted position 128B, and the line pressure which is being supplied to the input port 136 thereof is now not supplied to the output port 144 thereof, which is connected to a drain port, but is supplied to the output port 143 thereof instead. According to this, the multi plate brake 19 is supplied with actuating hydraulic fluid pressure, via the hydraulic fluid conduit 145 and the throttle element 146, and is engaged, and on the other hand the multi plate clutch 12 is now not supplied with any hydraulic fluid pressure, via the hydraulic fluid conduit 148 and the throttle element 149, but is connected to a drain port, and is thus now disengaged. These energization and fluid pressure conditions are shown in the row of the Table designated by "4" under the heading "D". It will be clear, to one skilled in the art, based upon inspection of the schematic transmission construction diagram shown in Fig. 1, that this engagement combination of the hydraulic fluid pressure activated friction engaging mechanisms causes the transmission system shown therein to be put into the fourth speed stage, i.e. the overdrive speed stage.

In the second case (b), when said electrical control device 79 is not energizing the first solenoid valve 73, but is energizing the second solenoid valve 76, then thereby hydraulic fluid pressure is present at the control port 68 of the first switching valve 63, but is not present at the control port 72 of the second switching valve 71, or at the control port 134 of the third/fourth switching valve 128. This case is the same as that of the third speed stage in the "3" range, except that in this third speed stage in the "D" range the port 141 of the third/fourth switching valve 128 is no longer supplied with the hydraulic fluid pressure which was supplied in the third speed stage in the "3" range. However, this difference makes no difference in the actual operation of the transmission, because the valve element 130 of the third/fourth switching valve 128 is in any event in its downwardly shifted position 128A by the biasing action of the compression coil spring 133, in the absence of hydraulic fluid pressure at the control port 134. Therefore, the energization and fluid pressure conditions shown in the row of the Table designated by "3" under the heading "D" are the same as those in the row of the Table designated by "3" under the heading "3".

In the third case (c), when said electrical control device 79 is energizing the first solenoid valve 73, and is also energizing the second solenoid valve 76, then thereby hydraulic fluid pressure is not present either at the control port 68 of the first switching valve 63, or at the control port 72 of the second switching valve 71, and is not present at the control port 134 of the third/fourth switching valve 128 either. This case is the same as that of the second speed stage in the "3" range or the "L" range, except that in this second speed stage in the "D" range the multi plate brake 26, which is adapted to be supplied with hydraulic fluid pressure from the "3,L" port 59 of the manual range selection valve 48 through the conduits 87 and 88, the ports 86 and 92 of the first switching valve 63, the conduit 89, the ports 100 and 116, and the conduit 122 including the low coast valve 119 and the throttle element 120, is not supplied with said hydraulic fluid pressure, and is therefore disengaged. These energization and fluid pressure conditions are shown in the row of the Table designated by "2" under the heading "D". It will be clear, to one skilled in the art, based upon inspection of the schematic transmission construction diagram shown in Fig. 1, that this engagement combination of the hydraulic fluid pressure activated friction engaging mechanisms causes the transmission system shown therein to be put into the second speed stage, with no engine braking being available, by contrast to the second speed stage in the "3" or the "L" range, in which engine braking was available.

Finally, in the fourth case (d), when said electrical control device 79 is energizing the first solenoid valve 73, but is not energizing the second solenoid valve 76, then thereby hydraulic fluid pressure is not present at the control port 68 of the first switching valve 63, but is present at the control port 72 of the second switching valve 71, and is also present at the control port 134 of the third/fourth switching valve 128. This case is the same as that of the first speed stage in the "3" range, except that in this first speed stage in the "D" range the valve element 130 of the third/fourth switching valve 128 is in its downwardly shifted position 128A by only the biasing action of the compression coil spring 133, under the balance between the line hydraulic fluid pressure Pl supplied to the opposite ends of the valve element 130, by contrast to the case of the first speed stage in the "3" range, in which the valve element 130 was shifted to its downwardly shifted position 128A by the biasing action of the compression coil spring 133 plus the force exerted downward on the piston element 132

- 56 -

0040820

by the hydraulic fluid pressure supplied to the port 141. Therefore, the energization and fluid pressure conditions shown in the row of the Table designated by "1" under the heading "D" are the same as those shown in the row of the Table designated by "1" under the heading "3". No engine braking is available in this stage.

Thus in conclusion it is seen that, according to the present invention, each of the transmission speed stages, i.e. the first speed stage, the second speed stage, the third speed stage or the directly connnected speed stage, and the fourth speed stage or the overdrive speed stage, is selected, according to a particular combination of energization conditions of the first and second solenoid valves 73 and 76, based upon the concept that there are four possible combinations of two binary switches.

However, particularly according to the concept of the present invention, the switching between two of the four transmission speed stages, i.e. the third or directly connected speed stage, and the fourth or the overdrive speed stage, in the shown preferred embodiment of the transmission control system according to the present invention, is not performed directly by the first and second switching valves, but is performed indirectly, by the action of the third/fourth switching valve 128, which is moved between its two switched positions in accordance with a first pressure which changes in relation to the switching operation of the first switching valve 63 - i.e., the pressure which is present in the hydraulic fluid conduit 140, and which is taken off from the output port 93 of the first switching valve 63, and also in accordance with a second pressure which changes in relation to the switching operation of the second switching valve 71 - i.e., the pressure which is present in the hydraulic fluid conduit 135, and which is taken off from the port 72 of the second switching valve 71. This is based upon the theoretical philosophy that, by balancing one of a certain two pairs made from a certain four signals against one of another two pairs made from said certain four signals which are divided differently from said certain two pairs, it is possible to make a discrimination between two signals of said certain four signals. Of course, the control port 141 of the third/fourth switching valve 128 is only used when the transmission system is being used in other than the "D" range, and at this time the above analysis gives priority to the setting of the shift range.

A very important particular feature of the shown preferred embodiment of the transmission control system according to the present invention is the particular way in which it is arranged to have a fail safe operation. In detail, it is clear that if the electrical control device 79 should fail, or if the supply of electrical power thereto should fail, then the first and the second solenoid valves 73 and 76 will both be in the deenergized condition. As explained in the preceding discussion of the function of the various elements of this transmission control system, in this case an emergency operability of the transmission system is available as follows: when it is desired to engage the neutral speed stage, then the driver of the vehicle may move the manual range selection lever thereof (not shown) to the "N" position; when it is desired to engage the reverse speed stage, then the driver of the vehicle may move the manual range selection lever thereof to the "R" position; when it is desired to engage the fourth speed stage, then the driver of the vehicle may move the manual range selection lever thereof to the "D" position; when it is desired to engage the third speed stage, then the driver of the vehicle may move the manual range selection lever thereof to the "3" position; and, when it is desired to engage the first speed stage, then the driver of the vehicle may move the manual range selection lever thereof to the "L" position. In other words, all the speed stages except the second speed stage can be manually engaged, in the event of an electrical failure of the transmission control system. This is a very useful fail safe operational mode capability, which is of great importance for the actual usability of a vehicle in an electrical failure situation, which must always be considered as a possibility.

Although the present invention has been shown and described with reference to a preferred embodiment thereof, and in terms of the illustrative drawings, it should not be considered as limited thereby. Various possible modifications, omissions, and alterations could be conceived of by one skilled in the art to the form and the content of any particular embodiment, without departing from the scope of the present invention. Therefore it is desired that the scope of the present invention, and of the protection sought to be granted by Letters Patent, should be defined not by any of the perhaps purely fortuitous details of the shown embodiment, or of the drawings, but solely by the scope of the appended claims, which follow.

## TABLE

| Shift Position | | 73 S1 | 76 S2 | 24 C1 | 25a $C_2$out | 25b $C_2$in | 26 B1 | 41 B2 | 27 B3 | 19 B0 | 12 C0 |
|---|---|---|---|---|---|---|---|---|---|---|---|
| P | | X | X | | | | | | | | O |
| R | | X | X | | O | O | | | O | | O |
| N | | X | X | | | | | | | | O |
| D | 4 | X | X | O | O | | | O | | O | |
| | 3 | X | O | O | O | | | O | | | O |
| | 2 | O | O | O | | | | O | | | O |
| | 1 | O | X | O | | | | | | | O |
| 3 | 3 | X | O | O | O | | | O | | | O |
| | 2 | O | O | O | | | O | O | | | O |
| | 1 | O | X | O | | | | | | | O |
| | (3) | X | X | O | O | | | O | | | O |
| L | 2 | O | O | O | | | O | O | | | O |
| | 1 | O | X | O | | | | | O | | O |
| | (1) | X | X | O | | | | | O | | O |

**CLAIMS**

1. An electrically activated transmission control system, for a vehicle automatic transmission comprising a gear transmission mechanism which comprises a plurality of hydraulic fluid pressure activated friction engaging mechanisms and which provides a first forward speed stage, a second forward speed stage which is higher geared than said first forward speed stage, a third forward speed stage which is higher geared than said first and second forward speed stages, and a fourth forward speed stage which is higher geared than said first, second, and third forward speed stages, according to selective supply of hydraulic fluid pressure to said hydraulic fluid pressure activated friction engaging mechanisms, comprising:

(a) a first electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either one of a certain two of said four forward speed stages, and its said second state so controlling supply of activating hydraulic fluid pressure to said hydraulic fluid pressure activated friction engaging mechanisms as to cause said gear transmission mechanism to provide either one of the other two of said four forward speed stages; and

(b) a second electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either a one of said certain two of said forward speed stages, or a one of said other two of said four forward speed stages, and its said second state so controlling supply of activating hydraulic fluid pressure to said hydraulic fluid pressure activated friction engaging mechanisms as to cause said gear transmission mechanism to provide either the other one of said certain two of said four forward speed stages, or the other one of said other two of said four forward speed stages;

**characterized by further comprising:**

(c) a hydraulic fluid pressure activated switching valve, which is switched between a first state and a second state according to a first hydraulic fluid pressure which is controlled in relation to the switching operation of said first electrically activated switching valve system and also according to a second hydraulic fluid pressure which is controlled in relation to the switching operation of said second electrically activated switching valve system;

(d) the switching of said hydraulic fluid pressure activated switching valve between its said first state and its said second state controlling supply of hydraulic fluid pressure to at least some of said hydraulic fluid pressure activated friction engaging mechanisms, so as to cause said gear transmission mechanism selectively to provide either a first particular one of said four forward speed stages, or another particular one of said four forward speed stages, according as to whether said hydraulic fluid pressure activated switching valve is in its said first state or is in its said second state.

2.     A transmission control system according to claim 1, **characterized in that** said first particular one of said four forward speed stages and said another particular one of said four forward speed stages are adjacent speed stages.

3.     A transmission control system according to claim 2, **characterized in that** said first particular one of said four forward speed stages is said third forward speed stage, and said another particular one of said four forward speed stages is said fourth forward speed stage.

4.     A transmission control system according to claim 3, **characterized in that** said certain two of said four forward speed stages are said first forward speed stage and said second forward speed stage, said other two of said four forward speed stages are said third forward speed stage and said fourth forward speed stage, said one of said certain two of said four forward speed stages is said second forward speed stage, and said one of said other two of said four forward speed stages is said third forward speed stage; said other one of said certain two of said four forward speed stages being said first forward speed stage, and said other one of said other two of said four forward speed stages being said fourth forward speed stage.

5.     A transmission control system according to claim 4, **characterized in that** said third forward speed stage is a directly connected speed stage, and said fourth forward speed stage is an overdrive speed stage.

- 62 -

0040820

6. An electrically activated transmission control system, for a vehicle automatic transmission comprising a gear transmission mechanism which comprises a plurality of hydraulic fluid pressure activated friction engaging mechanisms and which provides a first forward speed stage, a second forward speed stage which is higher geared than said first forward speed stage, a third forward speed stage which is a directly connected speed stage and which is higher geared than said first and second forward speed stages, and a fourth forward speed stage which is an overdrive speed stage and which is higher geared than said first, second, and third forward speed stages, according to selective supply of hydraulic fluid pressure to said hydraulic fluid pressure activated friction engaging mechanisms,

**characterized by comprising:**

(a) a first electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either said first forward speed stage or said second forward speed stage, and its said second state so controlling supply of activating hydraulic fluid pressure to said hydraulic fluid pressure activated friction engaging mechanisms as to cause said gear transmission mechanism to provide either said directly connected third forward speed stage or said overdrive fourth forward speed stage;

(b) a second electrically activated switching valve system, which is switched between a first state and a second state according to selective supply of activating electrical energy thereto, and which selectively controls supply of activating hydraulic fluid pressure to at least some of said hydraulic fluid pressure activated friction engaging mechanisms, according to its switched state; its said first state so controlling supply of activating hydraulic fluid pressure to said hydraulic fluid pressure activated friction engaging mechanisms as to cause said gear transmission mechanism to provide either said second forward speed stage or said directly connected third forward speed stage, and its said second state so controlling supply of activating hydraulic fluid pressure to said hydraulic fluid pressure activated friction engaging mechanisms as to cause said gear transmission mechanism to provide either said first forward speed stage or said overdrive fourth forward speed stage; and

(c)    a hydraulic fluid pressure activated switching valve, which is switched between a first state and a second state according to a first hydraulic fluid pressure which is controlled in relation to the switching operation of said first electrically activated switching valve system and also according to a second hydraulic fluid pressure which is controlled in relation to the switching operation of said second electrically activated switching valve system;

(d)    the switching of said hydraulic fluid pressure activated switching valve between its said first state and its said second state controlling supply of hydraulic fluid pressure to at least some of said hydraulic fluid pressure activated friction engaging mechanisms, so as to cause said gear transmission mechanism selectively to provide either said directly connected third forward speed stage, or said overdrive fourth forward speed stage, according as to whether said hydraulic fluid pressure activated switching valve is respectively in its said first state or is in its said second state.

7.    A transmission control system according to any one of claims 4, 5, or 6, characterized by further comprising a manual range selection valve which can be manually shifted to any one of a set of positions indicating "D" range, "3" range, and "L" range, and which produces various combinations of output hydraulic fluid pressures according to its shifted position, including a first output hydraulic fluid pressure which is output from said manual range selection valve when said manual range selection valve is shifted to either its said position indicating "3" range or its said position indicating "L" range, and which, when so output, is supplied to said hydraulic fluid pressure activated switching valve, so as positively to overridingly switch said hydraulic fluid pressure activated switching valve to its said first state, irrespective of any other hydraulic fluid pressures supplied to said hydraulic fluid pressure activated switching valve.

8.    A transmission control system according to claim 7, said manual range shifting valve being additionally shiftable to a position indicating "R". range, **characterized in that:**

(e)    said first electrically activated switching valve system comprises:

(e1)  a first solenoid valve which when and only when not energized provides a first transferred hydraulic fluid pressure supply of a second output hydraulic fluid pressure which is output from said manual range selection valve when and only when said manual range selection valve is shifted to either its said position indicating "D" range, to its said position indicating "3" range, or to its said position indicating "L" range;  and

(e2)  a first switching valve which is switched between a first state and a second state according to the selective supply of hydraulic fluid pressures including said first transferred hydraulic fluid pressure thereto, and which is biased towards its said second state by said first transferred hydraulic fluid pressure;

(f)    said second electrically activated switching valve system comprises:

(f1)  a second solenoid valve which when and only when not energized provides a second transferred hydraulic fluid pressure supply of said second output hydraulic fluid pressure;  and

(f2) a second switching valve which is switched between a first state and a second state according to the selective supply of hydraulic fluid pressures including said second transferred hydraulic fluid pressure thereto, and which is biased towards its said second state by said second transferred hydraulic fluid pressure;

(g) said first state and said second state of said first electrically activated switching valve system are respectively the electrically energized state and the electrically non energized state of said first solenoid valve, and said first state and said second state of said second electrically activated switching valve system are respectively the electrically energized state and the electrically non energized state of said second solenoid valve;

(h) a third output hydraulic fluid pressure which is output from said manual range selection valve when and only when said manual range selection valve is shifted to its said position indicating "L" range is supplied to said first electrically activated switching valve system and when present positively overridingly switches said first switching valve to its said first state, irrespective of any other hydraulic fluid pressures being supplied to said first switching valve;

(i) a fifth hydraulic fluid pressure, switched by said first switching valve both from said second output hydraulic fluid pressure and from a fourth output hydraulic fluid pressure which is output from said manual range selection valve when and only when said manual range selection valve is shifted to its said position indicating "R" range, said fifth hydraulic fluid pressure being present when and only when either said manual switching valve is shifted to its said position indicating "R" range and in addition said first switching valve is in its said first state, or said manual switching valve is shifted either to its said position indicating "D" range, to its said position indicating "3" range, or to its said position indicating "L" range and in addition said first switching valve is in its said second state, is supplied to said second electrically activated switching valve system and when present positively overridingly switches said second switching valve to its said first state, irrespective of any other hydraulic fluid pressures being supplied to said second switching valve;

- 66 -

0040820

(j)     said first switching valve switches a supply of said second output hydraulic fluid pressure to said hydraulic fluid pressure activated switching valve when said first switching valve is in its said first state, said supply of hydraulic fluid pressure positively overridingly switching said hydraulic fluid pressure activated switching valve to its said first state, irrespective of any other hydraulic fluid pressures being supplied to said second switching valve; and

(k)     no other fluid pressures activate said first and second switching valves and said hydraulic fluid pressure activated switching valve to switch them.

9.     An electrically activated transmission control system, for a vehicle automatic transmission comprising a gear transmission mechanism which comprises a plurality of hydraulic fluid pressure activated friction engaging mechanisms and which provides a reverse driving stage, a first forward speed stage, a second forward speed stage which is higher geared than said first forward speed stage, a third forward speed stage which is a directly connected speed stage and which is higher geared than said first and second forward speed stages, and a fourth forward speed stage which is an overdrive speed stage and which is higher geared than said first, second, and third forward speed stages, according to selective supply of activating hydraulic fluid pressure to said hydraulic fluid pressure activated friction engaging mechanisms, said transmission also comprising a manual range selection valve which can be manually shifted to any one of a set of positions indicating "D" range, "3" range, "L" range, and "R" range, and which produces various combinations of output hydraulic fluid pressures according to its shifted position, including:  a first output hydraulic fluid pressure which is output from said manual range selection valve when and only when said manual range selection valve is shifted either to its said position indicating "3" range or to its said position indicating "L" range; a second output hydraulic fluid pressure which is output from said manual range selection valve when and only when said manual range selection valve is shifted either to its said position indicating "D" range, to its said position indicating "3" range, or to its said position indicating "L" range; a third output hydraulic fluid pressure which is output from said manual range selection valve when and only when said manual range selection valve is shifted to its said position indicating "L" range; and a fourth output hydraulic fluid pressure which is output from said manual range selection valve when and only when said manual range selection valve is shifted to its said position indicating "R" range, **characterized by comprising:**

(a)     a first electrically activated switching valve system, comprising:

(a1)   a first solenoid valve which when and only when not electrically energized provides a first transferred hydraulic fluid pressure supply of said second output hydraulic fluid pressure; and

(a2)   a first switching valve which is switched between a first state and a second state, being biased towards its said second state by said first transferred hydraulic fluid pressure, and being biased towards its said first state by supply of said third output hydraulic fluid pressure when said third output hydraulic fluid pressure is output from said manual range selection valve; said first switching valve not being switchingly biased by any other hydraulic fluid pressures; said first switching valve, when not biased by any hydraulic fluid pressures, being in its said first state; said first switching valve, when biased both towards its said first state and also towards its said second state, being in its said first state; and said first switching valve selectively controlling supply of activating hydraulic fluid pressure to at least some of said hydraulic fluid pressure activated friction engaging mechanisms, according to its switched state;

(b)     a second electrically activated switching valve system, comprising:

(b1)   a second solenoid valve which when and only when not electrically energized provides a second transferred hydraulic fluid pressure supply of said second output hydraulic fluid pressure; and

(b2) a second switching valve which is switched between a first state and a second state, being biased towards its said second state by said second transferred hydraulic fluid pressure, and being biased towards its said first state by a fifth hydraulic fluid pressure switched by said first switching valve either from said second output hydraulic fluid pressure when said second output hydraulic fluid pressure is output from said manual range selection valve or from said fourth output hydraulic fluid pressure when said fourth output hydraulic fluid pressure is output from said manual range selection valve, said fifth hydraulic fluid pressure being present when and only when either said fourth output hydraulic fluid pressure is present and in addition said first switching valve is in its said first state, or said second output hydraulic fluid pressure is present and in addition said first switching valve is in its said second state; said second switching valve not being switchingly biased by any other hydraulic fluid pressures; said second switching valve, when not biased by any hydraulic fluid pressures, being in its said first state; said second switching valve, when biased both towards its said first state and also towards its said second state, being in its said first state; and said second switching valve selectively controlling supply of activating hydraulic fluid pressure to at least some of said hydraulic fluid pressure activated friction engaging mechanisms, according to its switched state;

and

(c) a hydraulic fluid pressure activated switching valve which is switched between a first state and a second state, being biased towards its said second state by said second transferred hydraulic fluid pressure, and being biased towards its said first state by said first output hydraulic fluid pressure and also by a supply of said second output hydraulic fluid pressure which is switched thereto by said first switching valve when and only when said second output hydraulic fluid pressure is output by said manual range selection valve and also said first switching valve is in its said first state; said hydraulic fluid pressure activated switching valve not being switchingly biased by any other hydraulic fluid pressures; said hydraulic

0040820

fluid pressure activated switching valve, when not biased by any hydraulic fluid pressures, being in its said first state; said hydraulic fluid pressure activated switching valve, when biased both towards its said first state and also towards its said second state, being in its said first state; and said hydraulic fluid pressure activated switching valve selectively controlling supply of activating hydraulic fluid pressure to at least some of said hydraulic fluid pressure activated friction engaging mechanisms, according to its switched state;

(d)    with said manual range selection valve shifted to its said position indicating "D" range:  the combination of said first and second solenoid valves being respectively in the energized and in the not energized states, said first switching valve being in its said first state, said second switching valve being in its said second state, and said hydraulic fluid pressure, activated switching valve being in its said first state providing such a combination of activating hydraulic fluid pressures to said hydraulic fluid pressure activated friction engaging mechanisms of said gear transmission mechanism as to cause said gear transmission mechanism to provide its first speed stage;  the combination of said first and second solenoid valves being both in their energized states, said first switching valve being in its said first state, said second switching valve being in its said first state, and said hydraulic fluid pressure activated switching valve being in its said first state providing such a combination of activating hydraulic fluid pressures to said hydraulic fluid pressure activated friction engaging mechanisms of said gear transmission mechanism as to cause said gear transmission mechanism to provide its second speed stage;  the combination of said first and second solenoid valves being respectively in the not energized and in the energized states, said first switching valve being in its said second state, said second switching valve being in its said first state, and said hydraulic fluid pressure activated switching valve being in its said first state providing such a combination of activating hydraulic fluid pressures to said hydraulic fluid pressure activated friction engaging mechanisms of said gear transmission mechanism as to cause said gear transmission mechanism to provide its directly connected third speed stage;  and the combination of said first and second solenoid valves being both in their not energized states, said first switching valve being in its said second state,

said second switching valve being in its said first state, and said hydraulic fluid pressure activated switching valve being in its said second state providing such a combination of activating hydraulic fluid pressures to said hydraulic fluid pressure activated friction engaging mechanisms of said gear transmission mechanism as to cause said gear transmission mechanism to provide its overdrive fourth speed stage.

10. A transmission control system according to claim 9, **characterized in that:**

(e)   with said manual range selection valve shifted to its said position indicating "D" range:  the combination of said first and second solenoid valves being respectively in the energized and in the not energized states, said first switching valve being in its said first state, said second switching valve being in its said second state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its first speed stage with no engine braking being available;  the combination of said first and second solenoid valves being both in their energized states, said first switching valve being in its said first state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its second speed stage with no engine braking being available;  and the combination of said first and second solenoid valves being respectively in the not energized and in the energized states, said first switching valve being in its said second state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its third directly connected speed stage with engine braking being available;

(f)     with said manual range selection valve shifted to its said position indicating "3" range or to its said position indicating "L" range:   the combination of said first and second solenoid valves being both in their energized states, said first switching valve being in its said first state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its second speed stage with engine braking being available;  and

(g)     with said manual range selection valve shifted to its said position indicating "L" range:   the combination of said first and second solenoid valves being respectively in the energized and in the not energized states, said first switching valve being in its said first state, said second switching valve being in its said second state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its first speed stage with engine braking being available.

11.   A transmission control system according to claim 9, **characterized in that:**

(h)   the combination of said manual range selection valve being in its said position indicating "R" range, said first and second solenoid valves being both in their not energized states, said first switching valve being in its said first state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its reverse driving stage;

(i)   the combination of said manual range selection valve being in its said position indicating "L" range, said first and second solenoid valves being both in their not energized states, said first switching valve being in its said first state, said second switching valve being in its said second state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its first speed stage;

(j)   the combination of said manual range selection valve being in its said position indicating "3" range, said first and second solenoid valves being both in their not energized states, said first switching valve being in its said second state, said second switching valve being in its said first state, and said hydraulic fluid pressure activated switching valve being in its said first state provides such a combination of activating hydraulic fluid pressures to said hydraulic fluid pressure activated friction engaging mechanisms of said gear transmission mechanism as to cause said gear transmission mechanism to provide its directly connected third speed stage; and

(k)   the combination of said manual range selection valve being in its said position indicating "D" range, said first and second solenoid valves being both in their not energized states, said first switching valve being in its said second state, said second switching valve being in its said first state, and said hydraulic fluid pressure activated switching valve being in its said second state provides such a combination of activating hydraulic fluid pressures to said hydraulic fluid pressure activated friction engaging mechanisms of said gear transmission mechanism as to cause said gear transmission mechanism to provide its overdrive fourth speed stage.

# FIG. 1

FIG. 2